(19) Europäisches Patentamt
European Patent Office
Office européen des brevets

(11) EP 2 901 208 B1

(12) **EUROPÄISCHE PATENTSCHRIFT**

(45) Veröffentlichungstag und Bekanntmachung des Hinweises auf die Patenterteilung:
**14.09.2016 Patentblatt 2016/37**

(21) Anmeldenummer: **13770657.8**

(22) Anmeldetag: **23.09.2013**

(51) Int Cl.:
***G02C 7/12*** *(2006.01)* ***G01M 11/02*** *(2006.01)*

(86) Internationale Anmeldenummer:
**PCT/EP2013/069711**

(87) Internationale Veröffentlichungsnummer:
**WO 2014/048873 (03.04.2014 Gazette 2014/14)**

(54) **VORRICHTUNG UND VERFAHREN ZUR DEMONSTRATION DES SEHEINDRUCKS FÜR EINEN TRÄGER EINER BRILLE MIT POLARISIERENDEN BRILLENGLÄSERN**

DEVICE AND METHOD FOR DEMONSTRATING THE VISUAL IMPRESSION FOR A WEARER OF A PAIR OF SPECTACLES WITH POLARIZING SPECTACLE LENSES

DISPOSITIF ET PROCÉDÉ DE DÉMONSTRATION DE L'IMPRESSION VISUELLE POUR UN PORTEUR DE LUNETTES À VERRES POLARISANTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.09.2012 DE 102012217841**
**28.09.2012 US 201261707090 P**

(43) Veröffentlichungstag der Anmeldung:
**05.08.2015 Patentblatt 2015/32**

(73) Patentinhaber:
- **Carl Zeiss Vision International GmbH**
  **73430 Aalen (DE)**
- **Carl Zeiss AG**
  **73447 Oberkochen (DE)**

(72) Erfinder:
- **PACHER, Peter**
  **91154 Roth (DE)**
- **BRAUNGER, Dieter**
  **73457 Essingen (DE)**

(74) Vertreter: **Carl Zeiss AG - Patentabteilung**
**Carl-Zeiss-Strasse 22**
**73447 Oberkochen (DE)**

(56) Entgegenhaltungen:
**EP-A1- 0 512 443** **DE-A1-102004 054 064**
**US-A1- 2012 002 281**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft eine Vorrichtung zur Demonstration des Seheindrucks für einen Träger einer Brille mit polarisierenden Brillengläsern nach dem Oberbegriff des Patentanspruchs 1 sowie ein Verfahren zur Demonstration des Seheindrucks für einen Träger einer Brille mit polarisierenden Brillengläsern nach dem Oberbegriff des Patentanspruchs 8.

Unter Brillengläsern werden im Rahmen der vorliegenden Erfindung alle Arten von optischen Korrekturgläsern oder Korrekturlinsen sowie auch Gläser oder Linsen ohne optische Korrektur verstanden, die Bestandteil einer Brille sind und durch die der Brillenträger bei bestimmungsgemäßem Gebrauch blickt. Es gibt Brillengläser aus Kunststoff und solche aus Mineralglas.

Polarisation beschreibt die Richtung einer Schwingung einer elektromagnetischen Welle. Natürliches Licht wird meist unpolarisiert als Überlagerung von verschiedenen Wellen von elektromagnetischer Strahlung mit unterschiedlicher Schwingungsebene und -phase wahrgenommen. Nach Reflexion an einer Grenzfläche weist das reflektierte Licht teilweise eine Polarisationsrichtung auf.

Ein polarisierendes Brillenglas ist in der DIN EN ISO 13666 (1998) definiert als ein Brillenglas, das unterschiedliche Lichtabsorption in Abhängigkeit von der Polarisation des auftreffenden Lichtes besitzt. Die Orientierung der maximalen Transmission des elektrischen Feldvektors der elektromagnetischen Strahlung durch ein polarisierendes Brillenglas wird als Polarisationsachse des Brillenglases bezeichnet. Die Lage der Polarisationsachse in der Fassung wird in Grad (°) angegeben, wobei 0° eine horizontale Ausrichtung und 90° eine vertikale Ausrichtung der Polarisationsachse beschreibt. Die Transmissionsebene eines polarisierenden Brillenglases ist definiert als eine das Brillenglas schneidende Ebene, in der die Ausbreitungsrichtung der übertragenen Strahlung enthalten ist und die parallel zur Orientierung der maximalen Transmission des elektrischen Feldvektors der übertragenen Strahlung ist. Die Polarisationsebene eines polarisierenden Brillenglases ist normal zur Transmissionsebene und wird oft durch Markierungen auf einem polarisierenden Brillenglas gekennzeichnet. Ein Aufbau zur Bestimmung der Polarisationsebene wird beispielsweise in der DIN EN ISO 8980-3:2004 oder den DIN EN 1836:2005+A1:2007 (D) gezeigt.

Es gibt Brillengläser, die dauerhaft eine vorzugsweise vorbestimmte polarisierende Eigenschaft besitzen und solche, bei denen sich die polarisierende Eigenschaft ändern kann. Zu letzteren zählen auch sogenannte phototrope Brillengläser. Bestandteil derartiger Brillengläser ist ein phototropes Material z.B. in Form einer Beschichtung oder in Form von Zusätzen zum Brillenglaskörper. Ein phototropes Material ist ein Material, das seine Lichttransmissionseigenschaften reversibel in Abhängigkeit von der Bestrahlungsstärke und den Wellenlängen der auftreffenden Strahlung ändert. Dabei kann die Veränderung der Lichttransmissionseigenschaften rein die Absorption verändern oder aber auch einen polarisierenden Effekt erzeugen.

Bei einer polarisierenden Brille sind die zwei polarisierenden Brillengläser in einer Fassung fest eingebaut. Darunter ist zu verstehen, dass zwischen der Fassung und den Brillengläsern eine mechanisch feste Verbindung besteht. Es können also zur Fixierung der Brillengläser sowohl Vollrandfassungen, Tragrandfassungen, Rimfassungen als auch randlose Fassungen vorgesehen sein.

Polarisierende Brillengläser finden hauptsächlich Verwendung in Sonnenbrillen. Bei derartigen polarisierenden Brillengläsern, welche die Blendung durch die Sonne reduzieren sollen, ist die Transmissionsebene aus den nachfolgenden Gründen normalerweise vertikal und die Polarisationsebene horizontal orientiert.

Bekanntlich ist der sogenannte Brewster Winkel der Winkel zur Normalen einer Grenzfläche, bei welchem einfallendes Licht so reflektiert wird, dass nur die parallel zur Grenzfläche (also senkrecht zur Einfallsebene) polarisierten Anteile reflektiert werden (s-polarisiert). Bei einer horizontalen Grenzfläche (wie beispielsweise bei einer Wasseroberfläche) ist unter diesem Winkel reflektiertes Licht daher horizontal polarisiert. Unter anderen, vom Brewster Winkel abweichenden Winkeln, hat das reflektierte Licht zusätzlich in der Einfallsebene liegende polarisierte Anteile (p-polarisiert). Bei einer polarisierenden Brille wie beispielsweise einer Sonnenbrille mit polarisierenden Brillengläsern ist die Polarisationsachse vertikal (90°) orientiert und die Polarisationsebene ist horizontal (0°) orientiert. Brillengläser mit vertikaler Polarisationsachse oder horizontaler Polarisationsebene sind also für vertikal polarisiertes Licht durchlässig. Damit sind Reflexionen auf horizontalen Flächen (wie beispielsweise Wasseroberflächen) für den Brillenträger stark reduziert.

Polarisierende Brillen bestehen aus zwei polarisierenden Brillengläsern, welche fest in einer Fassung eingebaut sind, wobei die beiden definierten Polarisationsebenen der beiden polarisierenden Brillengläser nach der DIN EN 1836:2005+A1:2007 nicht mehr als 6° voneinander abweichen dürfen.

Die DIN EN 1836:2005+A1:2007 (D) sieht ferner vor, dass die Polarisationsebene bei Sonnenbrillen um nicht mehr als +/-5° von der Horizontalen abweichen darf. Das bedeutet, dass polarisierende Brillengläser so in der Fassung eingebaut sein müssen, dass deren Polarisationsachse um nicht mehr als +/-5° von der Vertikalen abweichen. Solche Sonnenbrillen sind beispielsweise in der US 747,235 beschrieben.

Der Polarisationsgrad oder die Polarisationseffizienz quantifizieren die Güte der Polarisation eines Brillenglases. Die Begriffe Polarisationsgrad und Polarisationseffizienz werden in der Literatur oft als äquivalent angesehen. Der Polarisationsgrad und die Polarisationseffizienz werden in der DIN EN 1836 und der DIN EN ISO 13666 definiert. Der Polarisationsgrad P ist definiert als $P=(I_{max}-I_{min})/(I_{max}+I_{min})$, wobei $I_{max}$ und $I_{min}$ die Extremwerte des Lichttransmissionsgrades I bezeichnen. Zur Ermittlung des Polarisationsgrades wird das polarisierende Brillenglas auf einer Seite mit 100 % linear polarisiertem Licht mit einer definierten Polarisationsebene und mit einer Intensität bestrahlt. Auf der gegenüberliegenden Seite des polarisierenden Brillenglases kann die Intensität abhängig von der Winkelstellung des polarisierenden Brillenglases relativ zur definierten Polarisationsebene gemessen werden. Für einen bestimmten Winkel wird der Maximalwert $I_{max}$ des Lichttransmissionsgrades I ein Maximum erreichen. Diesen Winkel bezeichnet die Polarisationsachse. Bei dieser Winkelstellung ist jede zur definierten Polarisationsebene des einfallenden Lichts parallele Ebene eine Transmissionsebene des polarisierenden Brillenglases. Bei einem anderen Winkel tritt der Minimalwert $I_{min}$ des Lichttransmissionsgrades I auf. $I_{min}$ tritt meist bei einem zur Polarisationsachse um 90° abweichenden Winkel auf. Bei dieser Winkelstellung ist jede zur definierten Polarisationsebene des einfallenden Lichts parallele Ebene eine Polarisationsebene des polarisierenden Brillenglases. Auch die Angabe des Polarisationsverhältnisses $R=I_{max}/I_{min}$ kann zu Beurteilung der Qualität von polarisierenden Brillengläsern verwendet werden.

Polarisierende Brillengläser müssen gemäß DIN EN 1836:2005+A1:2007 (D) und DIN EN ISO 8980-3:2004 ein Verhältnis zwischen maximaler und minimaler Lichttransmission größer als 8:1 bzw. größer als 4:1 aufweisen. Polarisierende Brillengläser erreichen damit einen Polarisationsgrad von 78 % bzw. 60 %. Qualitativ hochwertige Gläser haben einen Polarisationsgrad von mehr als 99%.

Derartige Kennzahlen sind jedoch für einen Brillenträger nur schwer fassbare Größen. Ohne eigene Vergleichs- oder Erfahrungswerte oder ohne Kenntnis der Bedeutung der Kennzahlen ist es für den Brillenträger in der Regel kaum möglich qualitativ hochwertige Brillengläser von qualitativ minderwertigeren Brillengläsern zu unterscheiden.

Zur Demonstration der polarisierenden Eigenschaft von z.B. Sonnenbrillen mit polarisierenden Brillengläsern werden daher heute oft Aufkleber oder kleine Embleme verwendet, welche Licht mit einer definierten Polarisationsrichtung reflektieren. Dabei kann der Brillenträger durch polarisierende Brillengläser die Aufkleber oder Embleme betrachten. Wenn die Aufkleber oder Embleme relativ zu den polarisierenden Brillengläser in einer Fassung rotiert werden, so ist eine Intensitätsänderung bemerkbar, welche bei nicht polarisierenden Brillengläsern nicht auftritt. Damit kann jedoch keinerlei Aussage über die Qualität polarisierender Brillengläser in einer Fassung getroffen werden, sondern nur eine einfache Unterscheidung zwischen polarisierenden Brillengläsern in einer Fassung und nicht polarisierenden Brillengläsern in einer Fassung.

Weitere Demonstratoren beruhen darauf, dass einem Testbild mittels halbdurchlässiger Folie eine simulierte Reflexion überlagert wird. Bei Betrachtung des Demonstrators durch eine polarisierende Brille wird die simulierte Reflexion in ihrer Intensität stark verringert und das ursprüngliche Bild ist mit erhöhtem Kontrast zu sehen. Auch hier ist keine Unterscheidung der Qualität möglich. Außerdem zeigt diese Art von Demonstratoren nur ein einzelnes Testbild, welches gegebenenfalls nicht den Gebrauchsbedingungen des Brillenträgers entspricht.

Aus dem Stand der Technik sind ferner Sehprüfgeräte bekannt, die mit Hilfe von Sehzeichentafeln oder Displays Sehzeichen mit polarisiertem Licht unterschiedlicher Polarisationsrichtung anzeigen. Bei bestimmungsgemäßem Gebrauch trägt ein Proband eine Brille mit zwei unterschiedlich polarisierten Brillengläsern, wobei die Polarisationsachsen der beiden Brillengläser senkrecht aufeinander stehen. Damit wird erreicht, dass der Proband ein angezeigtes Sehzeichen oder Teile davon nur mit einem Auge und andere Teile nur mit dem anderen Auge wahrnehmen kann.

Ein derartiges Sehprüfgerät ist beispielsweise aus der EP 0 512 443 A1 bekannt. Das Sehprüfgerät besteht im Wesentlichen aus zwei Polarisationsfolien und zwei Flüssigkristall-Displays, welche alternierend angeordnet sind. Diese Anordnung ist in der Lage, das von einer Lichtquelle kommende Licht so zu beeinflussen, dass Sehzeichen oder Teile davon gezielt nur von einem Auge oder aber von beiden Augen gesehen werden können. Die Lichtquelle beleuchtet mit ihrem Licht zunächst die erste farbneutrale, durchsichtige Polarisationsfolie. Das durch die erste Polarisationsfolie fallende Licht durchdringt das erste ggf. farbige Display und beleuchtet die zweite, farbneutrale Polarisationsfolie. Das durch die zweite Polarisationsfolie fallende Licht durchdringt das zweite Display, wonach das Licht das Sehprüfgerät verlässt. Mit einem derartigen Sehprüfgerät kann man nun Figuren und Zeichnungen darstellen, indem man die einzelnen Flüssigkristallzellen antreibt. Soll das dargestellte Sehzeichen verändert werden, so erfolgt ein entsprechender Befehl über eine Tastatur an eine Schalteinrichtung, welche in gewünschter Art und Weise die beiden Treiberschaltungen der beiden Displays ansteuert.

Die EP 0 595 023 A1 beschreibt ein Sehprüfgerät im wesentlichen bestehend aus mindestens einem Vektographenfilm mit vielen einzelnen Polarisationselementen und mindestens einem Bildschirm. Die Polarisationselemente sind streifenförmig angeordnet, wobei die Polarisationselemente eines Streifens dieselbe Polarisationsrichtung besitzen. Die Polarisationselemente in den nebeneinander angeordneten Streifen haben aufeinander senkrecht stehende Polarisationsachsen. Explizit angemerkt wird in der Veröffentlichung, dass die Flüssigkeitskristall-Displays normalerweise aus mehreren hundertmal mehrere hundert LCD-Elementen bestehen, so dass bei genügend großem Abstand des Betrachters vom Display keine Streifen sichtbar sind.

Die DE 199 47 775 A1 beschreibt eine Testeinrichtung ähnlich der in der EP 0 595 023 A1 beschriebenen Art. Den Augen des Probanden werden waagerechte - übereinander angeordnete Zeilenpaare dargeboten, wobei durch die Testeinrichtung jeweils nur eine Zeile für das eine Auge und die andere Zeile für das andere Auge bereitgestellt wird.

Die DE 100 07 020 A1 betrifft ein Nahsehprüfgerät zur Anzeige von Sehzeichentafeln. Auf jeder Sehzeichentafel ist ein bzw. sind mehrere Sehzeichen zur Prüfung der Sehfähigkeit des Benutzers angeordnet. Eine Sehzeichentafel zeigt einen Stereotest, durch den die räumliche Wahrnehmung des Probanden überprüft wird. Aufgrund der horizontal versetzten, unterschiedlich polarisierten Dreiecke erscheinen diese zu einem in der Mitte der Sehzeichentafel angeordneten, schwarz dargestellten und für beide Augen wahrnehmbaren Punkt räumlich versetzt.

Diese Sehprüfgeräte sind konzipiert für Brillen mit polarisierenden Brillengläsern, deren Polarisationsachsen einen von Null verschiedenen Winkel, üblicherweise einen 90°-Winkel, einschließen. Ein mit dem Display des jeweiligen Sehprüfgeräts gerade angezeigtes Sehzeichen kann zwar beim Träger einer Brille mit polarisierten Brillengläsern mit parallel ausgerichteten Polarisationsachsen in Abhängigkeit von der Güte der Polarisationseigenschaften einen anderen Seheindruck hervorrufen, der Brillenträger kann jedoch im allgemeinen anhand des Seheindrucks nicht beurteilen, ob er eine qualitativ hochwertige oder eine minderwertige Brille trägt.

Die US 2006/0203338 A1, von der die Erfindung ausgeht, beschreibt ein gestapeltes Display zur Darstellung von dreidimensionalen Bildern und Videos. Es werden zwei überlagerte, polarisierte Bildmuster erzeugt, welche sich durch unterschiedliche Polarisationsebenen unterscheiden. Die zwei Bildmuster rufen durch zeitgleiches Betrachten durch eine Brille mit polarisierten Brillengläsern mit um 90° unterschiedlichen Polarisationsachsen beim Betrachter einen dreidimensionalen Seheindruck hervor. Ein dreidimensionaler Seheindruck lässt sich nur erzeugen, wenn die beiden Bildmuster einen Gegenstand aus unterschiedlichen Perspektiven zeigen. Die beiden Bildmuster sind also nicht deckungsgleich. Die Motive der beiden Bildmuster sind also nicht identisch. Betrachtet man das Display mit einer Brille mit polarisierten Brillengläsern mit parallel zueinander ausgerichteten Polarisationsachsen, so nimmt man entweder nur eines der beiden Bildmuster mit einem der beiden Augen wahr und zwar dann, wenn die Polarisationsrichtung des Lichts von diesem Bildmuster gerade mit der Orientierung der Polarisationsachse der Brillengläser zusammenfällt, oder man nimmt beide Bildmuster mit beiden Augen gleichzeitig wahr, was einen verschwommenen Seheindruck hervorruft, weil die beiden Motive nicht identisch und nicht deckungsgleich sind. Eine Aussage über die Güte der polarisierten Brille ist nicht möglich.

Aufgabe der Erfindung ist es, eine Vorrichtung und ein Verfahren zur Demonstration des Seheindrucks für einen Träger einer Brille mit polarisierenden Brillengläsern bereitzustellen, mit dem die Qualität und Funktionalität der polarisierenden Brille sowohl für den Käufer als auch den Verkäufer überprüft werden kann.

Diese Aufgabe wird durch eine Vorrichtung mit den Merkmalen des Patentanspruchs 1 sowie durch ein Verfahren mit den Merkmalen des Patentanspruchs 8 gelöst.

Vorteilhafte Ausführungen und Weiterbildungen der Erfindung sind Gegenstand der Unteransprüche.

Die erfindungsgemäße Vorrichtung zur Demonstration des Seheindrucks für einen Träger einer Brille mit polarisierenden Brillengläsern umfasst einen Speicher zum Bereitstellen eines ersten Bildes mit einem Motiv und einer zugehörigen ersten Polarisationsrichtung, einen Speicher zum Bereitstellen eines zweiten Bildes mit einem Motiv und einer zugehörigen zweiten von der ersten Polarisationsrichtung verschiedenen Polarisationsrichtung sowie eine Anzeigeeinrichtung zum Anzeigen des ersten Bildes mit in der ersten Polarisationsrichtung polarisiertem Licht und des zweiten Bildes mit in der zweiten Polarisationsrichtung polarisiertem Licht in überlagerter Darstellung. Erfindungsgemäß handelt es sich bei den beiden Motiven des ersten und zweiten Bildes um dasselbe Motiv. Abweichend von der in der US 2006/0203338 A1 beschriebenen Vorrichtung erfolgt die Anzeige des ersten Bildes und des zweiten Bildes so, dass das Motiv des ersten Bildes und das Motiv des zweiten Bildes formidentisch zusammenfallen. Die beiden Motive des ersten und zweiten Bildes stimmen also in ihrer Größe und Form überein und sind weder in für den Betrachter wahrnehmbarer Weise in lateraler Richtung noch in der Tiefe versetzt.

Der Begriff "Überlagerung" bedeutet auch, dass die Bilder für den Betrachter gleichzeitig wahrgenommen werden oder anders ausgedrückt, dass der Betrachter nicht den Eindruck hat, diese würden ihm nacheinander angezeigt. Dies bedeutet, dass jedes der polarisierten Bildmuster zumindest zehn Mal pro Sekunde dargestellt wird, wobei diese Anzeige der Einzelbilder durchaus im Wechsel erfolgen kann, solange das menschliche Auge diesen Umstand nicht zu erkennen vermag.

Ein Betrachter nimmt die beiden deckungsgleichen Motive mit bloßem Auge als ein einziges Motiv wahr. Trägt der Betrachter eine polarisierende Brille mit zwei Brillengläsern identischer Polarisationsachse in bestimmungsgemäßer Weise, so nimmt er die Bilder nur insoweit wahr, als diese polarisierte Anteile aufweisen, die mit der Polarisationsachse der Brillengläser zusammenfallen. Damit ist es möglich, durch geeignete Wahl des Motivs und der Polarisationsrichtungen der beiden Bilder beim Betrachter der Anzeigeeinrichtung einen Seheindruck zu erzeugen, der dem entspricht, den er hätte, wenn er das Motiv nicht als Abbild auf der Anzeigeeinrichtung sehen würde, sondern im Original z.B. als tatsächlich existierenden Gegenstand oder in Form einer Landschaft mit und ggf. ohne Verwendung einer polarisierenden Brille.

Es sei hiermit ausdrücklich klargestellt, dass der Begriff "Motiv" im Sinne von Bildmotiv zu verstehen ist, nämlich als der wesentliche inhaltliche Bestandteil eines Bildes wie z.B. einer Fotographie oder einer Graphik. Die Betonung liegt auf einem zentral dargestellten Objekt (Person, Gebäude, Teil einer Landschaft oder Situation).

Besonders eindrucksvoll lässt sich einem Betrachter die Wirkung einer polarisierenden Brille zeigen, wenn ihm ein seiner natürlichen Umgebung entsprechendes Motiv dargeboten wird. Ein derartiges Motiv kann z.B. eine sich aus dem Meer erhebende Insel bei klarem Himmel und strahlender Sonne sein. Ein Betrachter wird mit bloßem Auge starke Reflexionen des Sonnenlichts an der Wasseroberfläche wahrnehmen. Trägt der Betrachter eine polarisierende Sonnenbrille werden diese Reflexionen für ihn unsichtbar und er kann bei hinreichend klarem Wasser sogar auf den Grund sehen. Ziel der Erfindung ist es, insbesondere diese natürliche Situation für den Betrachter auf der Anzeigeeinrichtung künstlich nachzubilden.

Grundsätzlich ist es möglich, das vorstehend genannte Motiv und die beiden Bilder mit zugeordneter unterschiedlicher Polarisationsrichtung künstlich z.B. in Form einer Computergraphik zu erzeugen. Ein der Realität im Allgemeinen näher kommender Seheindruck lässt sich erzeugen, wenn das erste Bild eine fotographische Aufnahme einer Kamera mit vorgeschaltetem Polarisationsfilter mit einer ersten Polarisationsachse ist und wenn das zweite Bild ebenfalls eine fotographische Aufnahme einer Kamera mit vorgeschaltetem Polarisationsfilter mit einer zweiten von der ersten Polarisationsachse verschiedenen Polarisationsachse ist. Selbstverständlich ist es auch möglich, wenn nur eines der Bilder eine entsprechende fotographische Kameraaufnahme ist und das andere Bild z.B. aus einer entsprechende Modifikation des einen Bildes mit Hilfe eines Computers erzeugt wird. Um die erfindungsgemäße Formidentität der Motive in beiden Bildern zu erhalten, ist es im ersten Fall natürlich günstig, wenn die beiden fotographischen Aufnahmen von ein und derselben Kamera gemacht werden und wenn deren Einstellungen unverändert beibehalten werden. Auch die Aufnahmerichtung und Entfernung zum Objekt ist selbstverständlich vorzugsweise identisch bei beiden Aufnahmen zu wählen.

Es ist ferner möglich, bewegliche Motive, also beispielsweise in Form eines Videos mit einer fortlaufenden Sequenz an Bildern der vorstehend beschriebenen Art darzustellen. Ein derartiges bewegliches Motiv kann z.B. durch eine bewegte Kamera erzeugt werden. Insbesondere kann damit eine Folge von verschiedenen Betrachtungssituationen zeitlich nacheinander demonstriert werden.

Um die erfindungsgemäß erforderliche Formidentität der Motive in beiden Bildsequenzen zu erhalten, ist es natürlich günstig, wenn die beiden einander entsprechenden Videoaufnahmen gleichzeitig von zwei Videokameras mit jeweils vorgeschalteten Polarisationsfiltern mit jeweils unterschiedlich ausgerichteten Polarisationsachsen gemacht werden und wenn deren Einstellungen identisch gewählt sind. Auch die Aufnahmerichtung und Entfernung zum Objekt ist selbstverständlich vorzugsweise gleich bei beiden Videoaufnahmen zu wählen, was durch eine mechanische Verbindung der zwei Videokameras sowie starrer Ausrichtung auf dasselbe Motiv erfolgt.

Eine Alternative zur Verwendung zweier (Video-)Kameras oder einer (Video-)Kamera mit (fortlaufend sequentiell) im Wechsel erfolgender (Video-)Bildaufnahme mit Polarisationsfilter mit einer ersten Polarisationsachsausrichtung und mit Polarisationsfilter mit einer von der ersten Ausrichtung der Polarisationsachse abweichender zweiten Ausrichtung der Polarisationsachse kann auch eine einzige (Video-)Kamera zum Einsatz kommen, welcher ein Polarisationsfilter vorgeschaltet ist, der lokal unterschiedlich ausgerichtete Polarisationsachsen aufweist. Anders ausgedrückt weist das Polarisationsfilter an verschiedenen Stellen eine Polarisationsachse auf, die in eine erste Richtung ausgerichtet ist und an anderen Stellen eine Polarisationsachse, die in eine andere, von der ersten Richtung abweichende Richtung ausgerichtet ist. Diese Stellen mit unterschiedlicher Polarisationsachsausrichtung können z.B. entsprechend der hellen und dunklen Felder eines Schachbretts (d.h. helles Feld = Filterwirkung mit erster Polarisationsachsrichtung und dunkles Feld = Filterwirkung mit zweiter Polarisationsachsrichtung) oder streifenartig im Wechsel angeordnet sein.

Um einem Betrachter die Wirkung einer polarisierenden Brille zu demonstrieren, wäre es grundsätzlich möglich, als erstes und zweites Bild exakt dasselbe Bild zu verwenden, weil sich die Helligkeit mit der polarisierenden Brille gegenüber einer Betrachtung mit bloßem Auge verringert. Der Unterschied des Seheindrucks mit und ohne polarisierender Brille lässt sich jedoch besonders gut zeigen, wenn sich das erste Bild und das zweite Bild in wenigstens einer optischen Eigenschaft, insbesondere in wenigstens einer der optischen Eigenschaften aus der Gruppe Kontrast, Helligkeit, Sättigung und Farbton unterscheiden. Das Wissen über die Maßgeblichkeit dieser Eigenschaften ist insbesondere dann hilfreich, wenn wenigstens eines der beiden Bilder keine unmittelbare fotographische Aufnahme ist, sondern mit Hilfe technischer Hilfsmittel, wie spezielle optische und/oder rechnerische Filter, aus einer fotographischen Aufnahme erzeugt wurde, oder wenn wenigstens eines der beiden Bilder rein mittels computerimplementierten Hilfsmitteln erzeugt wurde.

Die Unterscheidung der Bilder in den optischen Eigenschaften ist für den Betrachter dann besonders eindrucksvoll, wenn in den Bildern zumindest zehn unterschiedliche Helligkeitswerte und/oder zehn unterschiedliche Farbwerte enthalten sind. Die unterschiedlichen optischen Eigenschaften der dargestellten Bilder äußern sich konkret in der Darstellbarkeit verminderter Reflexe, verminderter Spiegelungen, dunkleres Blau, Sichtbarkeit eines Regenbogens in einem der beiden Bilder. Die unterschiedlichen optischen Eigenschaften umfassen nicht den Bildaufbau oder verschiedene Ansichten oder Blickwinkel eines dreidimensionalen Objektes.

Es gibt verschiedene Möglichkeiten der Anzeige der beiden Bilder auf der Anzeigeeinrichtung. Dies kann zum einen an der Art der verwendeten Anzeigeeinrichtung und/oder auch an der Aufbereitung der Bilder zu deren Anzeige. Es gibt z.B. Anzeigeeinrichtungen, deren Bildpunkte (Pixel) in der Art der Felder eines Schachbretts angeordnet sind. Es gibt auch Anzeigeeinrichtungen, deren "Bildpunkte" streifenförmig verlaufen. Es gibt Anzeigeeinrichtungen, bei denen die Polarisationsachse einzelner Bildpunkte fest vorgegeben ist. Bei anderen Anzeigeeinrichtungen kann die Polarisationsachse sämtlicher Felder in beliebiger Weise eingestellt werden. Anzeigeeinrichtungen bei denen die Polarisationsachse einzelner Bildpunkte fest vorgegeben ist, können z.B. schachbrettmusterartig mit hellen und dunklen Feldern aufgebaut sein, wobei die den hellen Feldern des Schachbretts entsprechenden Bildpunkte eine Polarisationsachse aufweisen und die den dunklen Feldern entsprechenden Bildpunkte eine andere Polarisationsachse. Bei Anzeigeeinrichtungen mit bildpunktuell einstellbarer Polarisationsachse ist es dann wiederum möglich, diese mit Hilfe einer geeigneten Software in der Art von Anzeigeeinrichtungen mit fest vorgegebenen Polarisationsachse zu betreiben, indem vorbestimmten Bildpunkten stets dieselbe Polarisationsachse zugewiesen wird.

Unter Bildpunkten mit einer definierten Polarisationsachse sind solche Bildpunkte zu verstehen, welche alle zumindest 80 %, vorzugsweise zumindest 90 %, weiter vorzugsweise mindestens 95 % linear polarisierte Strahlung erzeugen, wobei der elektrische Vektor der Strahlung der Bildpunkte in einer zur Polarisationsebene parallelen Ebene enthalten ist.

Basierend auf dieser Erkenntnis kann die Anzeigeeinrichtung so eingerichtet sein, dass das angezeigte erste Bild aus ersten in der Art der Felder einer einzigen der Farben eines Schachbrettmusters angeordneten Bildpunkten besteht und dass das angezeigte zweite Bild aus zweiten in der Art der Felder der anderen Farbe des Schachbrettmusters angeordneten Bildpunkten besteht. Diese Anzeige eignet sich besonders für den Fall, wenn das menschliche Auge beim Betrachten die einzelnen Pixel nicht getrennt nebeneinander wahrnimmt, wie z.B. bei einem Computer- oder Fernsehbildschirm.

Die Anzeigeeinrichtung kann aber auch derart eingerichtet sein, dass das erste Bild aus in der Art aller Felder eines Schachbrettmusters angeordneten Bildpunkten besteht und dass das zweite Bild aus denselben Bildpunkten besteht und dass die jeweiligen angezeigten Bildpunkte die Information des entsprechenden Bildpunktes des ersten Bildes und die Information des entsprechenden Bildpunktes des zweiten Bildes enthält, wobei die Polarisationsrichtung der Vektoraddition der die Intensität berücksichtigenden Polarisationsrichtungsvektoren der entsprechenden Bildpunkte des ersten Bildes und des zweiten Bildes entspricht.

Grundsätzlich ist es möglich zur erfindungsgemäßen Demonstration in jeglicher Art linear polarisierte Bilder einander überlagert anzuzeigen soweit sich deren Polarisationsrichtungen unterscheiden. In besonders einfacher Weise lässt der polarisierende Effekt von polarisierenden Brillengläsern zeigen, wenn die erste Polarisationsrichtung senkrecht zu der zweiten Polarisationsrichtung ist. Damit lässt sich durch entsprechende Positionierung des Probanden und bekannter Orientierung der Polarisationsachse seiner polarisierender Brille festlegen, welches der beiden Bilder er wahrnimmt und welches nicht.

Es ist grundsätzlich möglich, die Anzeigeeinrichtung derart auszubilden, dass ein Betrachter einen dreidimensionalen Seheindruck erhält. Die Anzeigeeinrichtung muss dann Bereiche aufweisen, die ausschließlich für das linke Auge des Betrachters sichtbar sind und Bereiche, die ausschließlich für das rechte Auge des Betrachters sichtbar sind. Jeder der Bereiche für sich muss dann zum Anzeigen eines ersten Bildes mit in der ersten Polarisationsrichtung polarisiertem Licht und eines zweiten Bildes mit in der zweiten Polarisationsrichtung polarisiertem Licht in überlagerter Darstellung ausgebildet sein, so dass das Motiv des ersten Bildes und das Motiv des zweiten Bildes formidentisch zusammenfallen. Der dreidimensionale Seheindruck wird dadurch erzeugt, dass die Darstellung des Motivs des ersten Bereichs und des Motivs des zweiten Bereichs nicht formidentisch zusammenfallen.

Auf dem auf der in dem optischen Strahlengang zu den Augen des Probanden weisenden Seite der Anzeigeeinrichtung ist zu diesem Zweck eine Optikbaugruppe angeordnet, die das von einer ersten Gruppe ausgewählter Bereiche der Anzeigeeinrichtung dem optischen Strahlengang zugeführte Licht von dem Licht trennt, das dem Strahlengang von einer zweiten Gruppe ausgewählter Bereiche der Anzeigeeinrichtung zugeführt ist, um dem linken Auge des Probanden das Licht aus der ersten Gruppe ausgewählter Bereiche der Anzeigeeinrichtung zuzuführen und das Licht aus der zweiten Gruppe ausgewählter Bereiche der Anzeigeeinrichtung zu dem rechten Auge des Probanden zu leiten.

Die Optikbaugruppe für das Trennen des Lichts der ersten und zweiten Gruppe ausgewählter Bereiche der Anzeigeeinrichtung mit einem als Parallaxebarriere wirkenden Blendensystem auszubilden. Hierfür kann das Blendensystem z.B. als eine Maske mit abwechselnd lichtdurchlässigen und lichtundurchlässigen Bereichen ausgebildet sein.

Die abwechselnd lichtdurchlässigen und lichtundurchlässigen Bereiche der Maske können eine Schachbrettform oder eine Streifenform haben. Zweckmäßigerweise sind die Schachbrettform der Bildpunkte und die Schachbrett- oder Streifenform der Maske parallel zueinander angeordnet bzw. ausgerichtet.

Im allgemeinen Teil der Beschreibungseinleitung wurde darauf hingewiesen, dass auch phototrope Brillengläser zu den polarisierenden Brillengläsern zählen. Um die Wirkungsweise derartiger Brillengläser zu demonstrieren, sieht die Erfindung fakultativ eine Lichtquelle zum Aktivieren der phototropen Brillengläsern vor.

Das erfindungsgemäße Verfahren zur Demonstration des Seheindrucks für einen Träger einer Brille mit polarisierenden Brillengläsern, umfasst die folgenden Schritte:

a) Bereitstellen eines ersten Bildes mit einem Motiv und einer zugehörigen ersten Polarisationsrichtung

b) Bereitstellen eines zweiten Bildes mit demselben Motiv und einer zugehörigen zweiten von der ersten Polarisationsrichtung verschiedenen Polarisationsrichtung

c) Anzeigen des ersten Bildes mit in der ersten Polarisationsrichtung polarisiertem Licht und des zweiten Bildes mit in der zweiten Polarisationsrichtung polarisiertem Licht in überlagerter Darstellung, so dass das Motiv des ersten Bildes und das Motiv des zweiten Bildes formidentisch zusammenfallen.

Als erstes Bild kann wie oben zur erfindungsgemäßen Vorrichtung bereits ausgeführt wurde eine fotographische Aufnahme einer Kamera mit vorgeschaltetem Polarisationsfilter mit einer ersten Polarisationsachse verwendet werden. Alternativ oder zusätzlich kann auch als zweites Bild eine fotographische Aufnahme einer Kamera mit vorgeschaltetem Polarisationsfilter mit einer zweiten von der ersten Polarisationsachse verschiedenen Polarisationsachse verwendet werden. Diese können z.B. zusammen mit der Information über die Richtung der Polarisationsachse des verwendeten Filters als der jeweiligen zugehörigen Polarisationsrichtung abgespeichert werden. Letzteres ist jedoch nicht zwingend erforderlich. Die bereitgestellte jeweilige zugehörige Polarisationsrichtung kann auch jede andere beliebige Polarisationsrichtung sein. Zur Erzeugung einer möglichst realistischen Anzeige wird jedoch die Richtung der Polarisationsachse und der Polarisationsrichtung zusammenfallen (Die gleiche Orientierung von Aufnahmebild und Anzeigebild wird natürlich vorausgesetzt).

Bei dem erfindungsgemäßen Verfahren ist es von Vorteil, wenn sich das erste Bild und das zweite Bild in wenigstens einer optischen Eigenschaft, insbesondere in wenigstens einer der optischen Eigenschaften aus der Gruppe Kontrast, Helligkeit, Sättigung und Farbton unterscheiden. Die Gründe wurden oben zu der Beschreibung der erfindungsgemäßen Vorrichtung bereits dargelegt.

Es ist einerseits möglich, dass das angezeigte erste Bild aus ersten in der Art der Felder einer einzigen der Farben eines Schachbrettmusters angeordneten Bildpunkten besteht und dass das angezeigte zweite Bild aus zweiten in der Art der Felder der anderen Farbe des Schachbrettmusters angeordneten Bildpunkten besteht und es ist weiter möglich, dass das erste Bild aus in der Art der Felder eines Schachbrettmusters angeordneten Bildpunkten besteht und dass das zweite Bild aus denselben Bildpunkten besteht und dass die jeweiligen angezeigten Bildpunkte die Information des entsprechenden Bildpunktes des ersten Bildes und die Information des entsprechenden Bildpunktes des zweiten Bildes enthält, wobei die Polarisationsrichtung der Vektoraddition der die Intensität berücksichtigenden Polarisationsrichtungsvektoren der entsprechenden Bildpunkte des ersten Bildes und des zweiten Bildes entspricht.

Da eine herkömmliche Sonnenbrille polarisierende Gläser besitzt, deren Polarisationsachse um nicht mehr als +/-5° von der Vertikalen abweichen, ist es günstig, wenn die erste Polarisationsrichtung horizontal und die zweite Polarisationsrichtung vertikal ausgerichtet wird. Die Polarisationsrichtung eines der beiden Bilder entspricht demzufolge der Richtung der Polarisationsachse der Brillengläser und die Polarisationsrichtung des anderen der beiden Bilder steht senkrecht auf dieser Polarisationsachse. Demzufolge nimmt der Brillenträger mit polarisierender Brille nur das eine der Bilder wahr, während er ohne polarisierende Brille beide Bilder in Überlagerung sieht. Bei Betrachtung der Bilderzeugungseinrichtung ohne polarisierende Brillengläser ist die Überlagerung aller polarisierten Bilder sichtbar, da das bloße Auge Licht mit verschiedenen Polarisationsrichtungen nicht unterscheiden kann.

Das Verfahren nach der Erfindung kann folgenden weiteren Verfahrensschritt umfassen:

d) Positionieren eines Probanden zum Betrachten der angezeigten Bilder in überlagerter Darstellung wahlweise mit dem bloßen Auge und/oder durch eine Brille mit nicht-polarisierenden Brillengläsern und/oder durch die Brille mit den polarisierenden Brillengläsern.

Damit werden dem Probanden die unterschiedlichen Seheindrücke mit dem bloßen Auge, durch eine Brille mit nicht-polarisierenden Brillengläsern und durch eine Brille mit den polarisierenden Brillengläsern verdeutlicht und der Proband wird die Vorzüge von polarisierenden Brillengläsern erkennen.

In diesem Zusammenhang kann dem Probanden auf Nachfrage auch die Funktionsweise und die Wirkung phototroper Brillengläser nahegebracht werden. Es ist daher vorgesehen bei Bedarf eine die phototropen Brillengläser aktivierende Lichtquelle einzuschalten.

Die Lichtquelle kann z.B. eine UV-Lampe sein. Mittels einer derartigen UV-Lampe, welche geeignet ist, phototrope Brillengläser zu aktivieren, kann z.B. eine phototrope polarisierende Brille für 60 Sekunden mit ultraviolettem Licht bestrahlt werden. Die so bestrahlte phototrope polarisierende Brille zeigt nach Bestrahlung polarisierende Eigenschaften. Eine Testperson kann dann die Qualität dieser Brille überprüfen.

Unter Umständen ist es sinnvoll, dass die zur Aktivierung geeignete Lampe zumindest ab dem Positionieren eines Probanden dauerhaft leuchtet, sodass eine konstante Aktivierung der phototropen polarisierenden Brillengläser erfolgt.

Die Erfindung wird nachfolgend anhand der Zeichnung näher beschrieben. Gleiche oder funktionsgleiche Komponenten sind in den Figuren mit identischen Bezugszeichen versehen. Es zeigen:

Figur 1 ein Ausführungsbeispiel einer erfindungsgemäßen Vorrichtung mit einem Display zur Demonstration des Seheindrucks für einen Träger einer Brille mit polarisierenden Brillengläsern

a) Aufbau der Vorrichtung
b) Bildüberlagerung mit der Vorrichtung

Figur 2 eine erste Variante für die Anordnung polarisierender Bildpunkte in dem Display der Vorrichtung nach der Figur 1

Figur 3 eine zweite Variante für die Anordnung polarisierender Bildpunkte in dem Display der Vorrichtung nach der Figur 1

Figur 4 einen prinzipiellen Aufbau von polarisierenden Brillengläsern in einer Brillenfassung

a) Brille mit Fassung und Brillenglashorizontale
b) Polarisationswirkung eines polarisierenden Brillenglases in perspektivischer Darstellung
c) polarisierende Brillengläser mit unterschiedlicher Polarisationsachse
d) polarisierende Brille mit vertikal polarisierenden Brillengläsern

Figur 5 ein schematisches Ablaufdiagramm eines erfindungsgemäßen Verfahrens zur Demonstration des Seheindrucks für einen Träger einer Brille mit polarisierenden Brillengläsern

Figur 6 schematische Darstellung der Beurteilung der Güte von polarisierenden Brillengläsern mit einer Vorrichtung nach der Figur 1

Figur 7 eine Auswahl an Motiven für Bilder zur Durchführung des Verfahrens nach der Figur 5

a) Straßenverkehrsmotiv:

Bild oben: Aufnahme mit Polarisationsfilter mit horizontaler Polarisationsachse
Bild unten: Aufnahme mit Polarisationsfilter mit vertikaler Polarisationsachse

b) Strandmotiv:

Bild oben: Aufnahme mit Polarisationsfilter mit horizontaler Polarisationsachse
Bild unten: Aufnahme mit Polarisationsfilter mit vertikaler Polarisationsachse

Figur 8 eine Defekterkennung basierend auf einem einfachen Bildmuster

a) zwei polarisierende Bilder und überlagertes Bild
b) sichtbares Bild bei Betrachtung des überlagerten Bildes nach a) mit einem polarisierenden Brillenglas mit vertikaler Polarisationsachse
c) sichtbares Bild bei Betrachtung des überlagerten Bildes nach a) mit einem polarisierenden Brillenglas mit 45° geneigter Polarisationsachse
d) sichtbares Bild bei Betrachtung des überlagerten Bildes nach a) mit einem polarisierenden Brillenglas mit horizontaler Polarisationsachse
e) sichtbares Bild bei Betrachtung des überlagerten Bildes nach a) mit einem polarisierenden Brillenglas mit nicht einheitlicher Polarisationsachse

Figur 9 eine Variante für die Anordnung polarisierender Bildpunkte sowie einer Parallaxiermaske in dem Display der Vorrichtung nach der Figur 1 zur Erzeugung eines dreidimensionalen Seheindrucks

Figur 10 die Anordnung polarisierender Bildpunkte in dem Display der Vorrichtung des Ausführungsbeispiels nach der Figur 9

Figur 11 die Anordnung durchlässiger und nichtdurchlässiger Bereiche in der Parallaxiermaske des Ausführungsbeispiels nach der Figur 9.

Die Figur 1 a) zeigt den schematischen Aufbau einer erfindungsgemäßen Vorrichtung 100 zum Testen der beiden polarisierenden Brillengläser 410a, 410b einer Brille 400. Die Vorrichtung 100 umfasst eine Bilderzeugungseinrichtung 102. Die Bilderzeugungseinrichtung 102 enthält eine Anzeigeeinrichtung in Form eines Displays 110 mit einer Vielzahl an Bildpunkten 112a, 112b, 112c, die über eine Treibergruppe 120 und eine Rechnereinheit 150 mit Speicher 152 angesteuert werden. Weiterhin ist im Ausführungsbeispiel nach der Figur 1 eine Lichtquelle 140 zum Aktivieren von phototropen Brillengläsern 410a, 410b vorgesehen.

Die Schemazeichnung der Figur 1 zeigt weiter einen Probanden 170, der das Display 110 der Bilderzeugungseinrichtung 102 aus einem Abstand D betrachtet. Der Abstand D liegt im Bereich 30 cm < D < 7 m. Der Proband 160 trägt auf seiner Nase 160 eine Brille 400 mit zwei polarisierenden Brillengläsern 410a, 410b. Vor den Augen 161a und 161b des Probanden 170 befinden sich demnach polarisierende Brillengläser 410a, 410b in einer Fassung 402.

Das Display 110 ist beispielsweise als Leuchtdiodenmatrix Display (nachfolgend als LED Matrix Display bezeichnet) oder als Flüssigkristallmatrix Display (nachfolgend als LC Matrix Display bezeichnet) ausgeführt.

Jeder Bildpunkt 112a, 112b, 112c des Displays 110 weist eine eindeutig definierte Polarisationsebene auf. Zur Festlegung der Polarisationsebene eines jeden Bildpunktes 112a, 112b, 112c gibt es verschiedene Möglichkeiten.

So kann die jeweilige Polarisationsebene der Bildpunkte 112a, 112b, 112c beispielsweise hardwaremäßig, also z.B. mittels entsprechender Polarisationsfolien, vorgegeben sein. Dabei haben vorteilhafterweise Gruppen von Bildpunkten 112a, 112c dieselbe definierte Polarisationsebene. Über die Treibergruppe 120 und die Rechnereinheit 150 werden in diesem Fall die Intensitäten jedes einzelnen der Bildpunkte 112a, 112b, 112c eingestellt.

Die Definition der Polarisationsebene von Bildpunkten 111 kann alternativ auch durch die Treibergruppe 120 und die Rechnereinheit 150 vorgegeben werden. Dies ist beispielsweise bei sogenannten Dual Stack LC Displays möglich. Über die Treibergruppe 120 und die Rechnereinheit 150 werden dann die Intensitäten und die Polarisationsebene jedes einzelnen der Bildpunkte 112a, 112b, 112c eingestellt.

Es gibt Displays, bei denen nur eine Wahl zwischen diskreten, fest vorgegebenen Polarisationsebenen besteht. Bei anderen Displays kann die Polarisationsebene der Bildpunkte 112a, 112b, 112c in einem Winkelbereich zwischen 0° und 90° verändert werden.

In dem Speicher 152 sind zwei Bilder 114, 116 mit demselben Motiv 122 abgespeichert. Zu jedem Bild 114, 116 ist eine Polarisationsrichtung abgespeichert, wobei die Polarisationsrichtung des einen Bildes 114 von der Polarisationsrichtung des anderen Bildes 116 abweicht. Unter Abspeichern einer Polarisationsrichtung versteht man die Hinterlegung einer abrufbaren Information zum Anzeigen der Bilder 114, 116 mit linear polarisiertem Licht vorgegebener Polarisationsrichtung. Dies schließt den Fall ein, dass die jeweiligen Bilder 114, 116 über die Bildpunkte eines Displays ausgegeben werden, die mit einem Filter ausgestattet sind, dessen Polarisationsachse der zugeordneten Polarisationsrichtung entspricht.

Mit Hilfe des Displays 110 werden nach der Erfindung gleichzeitig die zwei Bilder 114, 116 einander überlagert als Anzeigebild 118 angezeigt und zwar derart, dass das Motiv 122a des ersten Bildes 114 und das Motiv 122b des zweiten Bildes 116 formidentisch das Motiv 122 bildend zusammenfallen, wie dies in Figur 1 b) vereinfacht schematisch gezeigt ist.

Eine mögliche Anordnung der Bildpunkte zur Anzeige des ersten Bildes 210 und der Bildpunkte zur Anzeige des zweiten Bildes 220 zeigt die Figur 2. Das erste Bild 210 besteht aus den Bildpunkten 210a, 210b, 210c, 210d, 210e mit einer ersten definierten Polarisationsebene. Diese definierte Polarisationsebene kann z.B. 90° zur Horizontalen einnehmen, also eine vertikale Ausrichtung aufweisen. Es ist ebenfalls möglich, dass die definierte Polarisationsebene z.B. 45° zur Horizontalen einnimmt. Das zweite Bild 220 besteht aus den Bildpunkten 220a, 220b, 220c, 220d, 220e mit einer zweiten definierten Polarisationsebene. Die erste und die zweite definierte Polarisationsebene können einen Winkel von 90° bilden. Es ist möglich, dass die zweite definierte Polarisationsebene z.B. 0° zur Horizontalen einnimmt, also eine horizontale Ausrichtung aufweist. Es ist ebenfalls möglich, dass die zweite Polarisationsebene z.B. 135° zur Horizontalen einnimmt.

Figur 2 zeigt außerdem ein Beispiel für ein überlagertes polarisiertes Bild 230, welches sowohl aus dem Bild 210 mit Bildpunkten 210a, 210b, 210c, 210d, 210e mit einer ersten definierten Polarisationsebene sowie aus dem Bild 220 mit Bildpunkten 220a, 220b, 220c, 220d, 220e mit einer zweiten definierten Polarisationsebene besteht.

Die Figur 3 zeigt eine zweite Variante für die Anordnung polarisierender Bildpunkte. Das erste Bild 310 besteht aus den Bildpunkten 310a, 310b, 310c, 310d, 310e, 310f, 310g, 310h, 310i, 310k mit einer ersten definierten Polarisationsrichtung und Intensität. Diese definierte Polarisationsrichtung ist im Ausführungsbeispiel vertikal. Das zweite Bild 320 besteht aus den Bildpunkten 320a, 320b, 320c, 320d, 320e, 320f, 320g, 320h, 320i, 320k mit einer zweiten definierten Polarisationsrichtung und Intensität. Die erste und die zweite definierte Polarisationsrichtung schließen einen Winkel von 90° ein. In beiden Fällen sind abweichende Orientierungen möglich.

Die Überlagerung der beiden Bilder 310 und 320 zum angezeigten Bild 330 erfolgt punktweise durch Vektoraddition des elektrischen Feldvektors, welcher Intensität (Betrag) und Polarisationsrichtung des von den jeweiligen Bildpunkten 330a, 330b, 330c, 330d, 330e, 330f, 330g, 330h, 330i, 330k ausgehenden Lichts berücksichtigt.

Die Figur 4 zeigt den Aufbau von polarisierenden Brillengläsern 400. In eine Fassung 400 (Figur 4a)) mit einer Fassungshorizontalen 401 werden polarisierende Brillengläser 410, 410a, 410b eingebaut (Figuren 4b), 4c)). Trifft unpolarisiertes Licht 416 auf ein polarisierendes Brillenglas 410, wie dies in Figur 4b) gezeigt ist, so wird nur ein Teil 417 übertragen und zwar (abgesehen von Reflexions- und Absorptionsverlusten) der Teil der elektromagnetischen Strahlung des auftreffenden Lichts 416, dessen Polarisationsrichtung 416a mit der Polarisationsachse 411 des Brillenglases 414 zusammenfällt. Die Polarisationsrichtung des transmittierten Lichts 417 ist in der Zeichnung mit dem Bezugszeichen 417a gekennzeichnet. Der Teil der elektromagnetischen Strahlung des auftreffenden Lichts 416, dessen Polarisationsrichtung 416b nicht mit der Polarisationsachse 411 des Brillenglases 414 zusammenfällt wird entweder reflektiert oder absorbiert.

Ferner sind in der Figur 4b) die Transmissionsebene 414 und die Polarisationsebene 413 eingezeichnet. Die Transmissionsebene 414 des polarisierenden Brillenglases 410 ist eine Ebene, die das Brillenglas 410 schneidet und in der die Ausbreitungsrichtung 418 der übertragenen Strahlung 417 enthalten ist und die parallel zur Orientierung 416a der maximalen Transmission des elektrischen Vektors der übertragenen Strahlung ist. Die Transmissionsebene 414 kann daher die Polarisationsachse 411 beinhalten. Die Normalebene zur Transmissionsebene 414 wird Polarisationsebene 413 genannt und wird durch Markierungen 412 an dem Brillenglas 410 gekennzeichnet.

Polarisierende Brillengläser 410, 410a, 410b sind also dadurch gekennzeichnet, dass diese eine definierte Polarisationsachse 411, 411a, 411b aufweisen, wie dies auch in der Figur 4c) noch einmal graphisch verdeutlicht ist. Durch Einbau von polarisierenden Brillengläsern 410a, 410b in eine Fassung 400 wird die Lage der Polarisationsachsen 411a, 411b und der optional durch die Markierungen 412a, 412b gekennzeichneten Polarisationsebenen relativ zur Fassungshorizontalen 401 definiert. In Figur 4d) sind Brillengläser in einer Fassung 420 mit definierten Polarisationsachsen 411a, 411b von jeweils 90° (vertikale Ausrichtung) gezeigt. Die optional durch die Markierungen 412a, 412b gekennzeichneten Polarisationsebenen sind im Koordinatensystem der Fassung horizontal ausgerichtet, also parallel zu der Fassungshorizontalen 401. Diese Ausrichtung ist gewünscht etwa bei Sonnenbrillen, um Reflektionen von horizontalen Flächen zu minimieren.

Die Figur 5 zeigt ein Verfahren zur Demonstration des Seheindrucks für einen Träger einer Brille mit polarisierenden Brillengläsern in schematischer Darstellung:

Ausgangspunkt ist zunächst die Suche nach einem geeigneten Motiv anhand dessen dem Träger die Wirkung einer polarisierenden Brille verdeutlicht werden soll (nicht in Figur 5 dargestellt, 502). Die Figur 7 zeigt eine Auswahl an Motiven für Bilder, die von dem Erfinder als besonders geeignet angesehen werden, weil sie einen Seheindruck unter natürlichen Umgebungsbedingungen simulieren lassen. Dargestellt ist jeweils links ein Bild eines Gegenstands oder einer Landschaft, wie der Gegenstand oder die Landschaft vom unmittelbaren Betrachter mit bloßem Auge wahrgenommen wird und rechts ein Bild des Gegenstands oder der Landschaft, wie der Betrachter den Gegenstand oder die Landschaft sieht, wenn er eine polarisierende Brille bestimmungsgemäß trägt.

Von einem für geeignet befundenen Motiv wird in einem ersten Schritt 504 eine fotographische Aufnahme einer Kamera mit vorgeschaltetem Polarisationsfilter mit einer ersten Polarisationsachse gemacht. Die Polarisationsachse verläuft in dem dargestellten Beispiel in vertikaler Richtung. Das Speichern des Bildes der Kamera ist in Schritt 506 gezeigt. Mit derselben Kamera wird von dem Motiv in einem weiteren Schritt 508 eine fotographische Aufnahme mit vorgeschaltetem Polarisationsfilter aber mit einer zweiten von der ersten Polarisationsachse abweichenden Polarisationsachse gemacht. Die zweite Polarisationsachse verläuft in dem dargestellten Beispiel in horizontaler Richtung. Das Speichern des zweiten Bildes der Kamera ist in Schritt 508 gezeigt.

In einem nachfolgenden Schritt 512 werden das erste Bild zusammen mit der zugehörigen ersten Polarisationsrichtung und das zweite Bild zusammen mit der zugehörigen zweiten Polarisationsrichtung bereitgestellt. In dem Schritt 514 erfolgt ein Anzeigen des ersten Bildes mit in der ersten Polarisationsrichtung polarisiertem Licht und des zweiten Bildes mit in der zweiten Polarisationsrichtung polarisiertem Licht in überlagerter Darstellung, so dass das Motiv des ersten Bildes und das Motiv des zweiten Bildes formidentisch zusammenfallen.

In dem nachfolgenden Schritt 516 wird einem Probanden 170, einem potentiellen Träger einer polarisierenden Brille, das angezeigte überlagerte Bild zur Ansicht gezeigt. Der Träger 170 wird so positioniert, dass er die angezeigten Bilder in überlagerter Darstellung wahlweise mit dem bloßen Auge 161a, 161b und/oder durch eine Brille mit nichtpolarisierenden Brillengläsern und/oder durch die Brille 400 mit den polarisierenden Brillengläsern 410a, 410b betrachten kann.

Die Figur 6 zeigt diesen Vorgang in schematischer Darstellung. Der Figur 6a entnimmt man die Bilderzeugungseinrichtung 100 aus der Figur 1, welche von dem Probanden 170 im Abstand D betrachtet wird, wobei zwischen den Augen 161a, 161b des Probanden 160 und der Bilderzeugungseinrichtung 100 keinerlei polarisierendes Element, wie beispielsweise polarisierende Brillengläser in einer Fassung, positioniert ist. Es wird eine Überlagerung der Bilder wahrgenommen.

Bei unterschiedlicher definierter erster und zweiter Polarisationsebene von Bildpunkten 112a, 112b, 112c,... wird ohne polarisierendes Element, wie beispielsweise polarisierende Brillengläser im Strahlengang kein von der Polarisationsachse abhängiger Intensitätsunterschied zwischen dem ersten polarisierten Bild und dem zweiten polarisierten Bild wahrgenommen.

Wenn sich zwischen den Augen 161a, 161b des Probanden 170 und der Bilderzeugungseinrichtung 100 polarisierende Brillengläser in einer Fassung befinden, so wird bei unterschiedlicher definierter erster und zweiter Polarisationsebene von Bildern ein Unterschied in den Intensitäten der Bilder wahrgenommen. Dieser Unterschied in den Intensitäten kann zu Vergleichen zwischen verschiedenen polarisierenden Brillengläsern in einer Fassung verwendet werden. Insbesondere kann untersucht werden, ob Brillengläser in der Fassung polarisierende Eigenschaften aufweisen.

Figur 6b) zeigt den Fall, dass die Brille 400 umfassend die polarisierenden Brillengläser 410a, 410b in der Fassung 402 in örtlicher Nähe zum Probanden 170 platziert werden. Unter in örtlicher Nähe zum Probanden 170 ist zu verstehen, dass der Abstand vom Probanden 170 zu den polarisierenden Brillengläsern 410a, 410b weniger als 30% des Abstands D beträgt. Insbesondere können die polarisierenden Brillengläser 410a, 410b in der Fassung 402 in bestimmungsgemäßer Weise vom Probanden 170 auf der Nase 160 getragen werden.

Figur 6c) zeigt den Fall, dass die polarisierende Brille 400 in örtlicher Nähe zur Bilderzeugungseinrichtung 100 platziert ist. Unter in örtlicher Nähe ist zu versehen, dass der Abstand der Bilderzeugungseinrichtung 100 zu den polarisierenden Brillengläser in einer Fassung 320 weniger als 30% des Abstands D betragen. Insbesondere kann die polarisierende Brille 400 im Abstand von 0 cm bis 10 cm zur Bilderzeugungseinrichtung 100 platziert sein. Figur 8a) zeigt ein erstes polarisiertes Bild 210 und ein zweites polarisiertes Bild 220, sowie das entstehende überlagerte polarisierte Bild 230. Das erste und zweite polarisierte Bild 210, 220 unterscheiden sich in den optischen Eigenschaften. In diesem Ausführungsbeispiel besteht das erste polarisierte Bild 210 aus Bildpunkten (z.B. entsprechend den Bildpunkten 210a, 210b, 210c,.. nach der Figur 2) mit einer ersten definierten Polarisationsebene, wobei die Polarisationsebene vertikal ist. Das zweite polarisierte Bild 220 besteht aus Bildpunkten (z.B. 220a, 220b, 220c,..) mit einer zweiten definierten Polarisationsebene, wobei die Polarisationsebene horizontal ist. Das erste Bild 210 ist vollflächig in einer ersten Farbe, das zweite Bild 220 ist vollflächig in einer zweiten Farbe gehalten. In diesem Beispiel wird als erste Farbe die Farbe Grün gewählt, als zweite Farbe wird die Farbe Rot gewählt. Wenn zwischen den Augen 161a, 161b des Probanden 160 und der Bilderzeugungseinrichtung 100 keinerlei polarisierendes Element, wie beispielsweise polarisierende Brillengläser 410a, 410b in einer Fassung 402, positioniert ist, so wird das überlagerte polarisierte Bild 230 wahrgenommen.

Das überlagerte polarisierte Bild 230 erscheint in diesem ersten Ausführungsbeispiel als Gelb. Wenn sich zwischen den Augen 161a, 161b des Probanden 160 und dem Display 110 polarisierende Brillengläser 410a, 410b befinden, welche wie bei Sonnenbrillen gewünscht, für beide polarisierende Brillengläser 410a, 410b eine definierte Polarisationsachse 411a, 411b von jeweils 90° aufweisen bzw. jeweils eine horizontal ausgerichtete, parallel zu einer Fassungshorizontalen 401 liegende Polarisationsebene aufweisen, welche durch Markierungen 412, 412a, 412b gekennzeichnet sein können, so wird bei hohem Polarisationsgrad P nur das erste Bild 210 zur Anzeige gebracht, da für diesen Fall die Polarisationsebene der Bildpunkte 210a, 210b, 210c des ersten Bildes 210 mit der Polarisationsachse 411 a der polarisierten Brillengläser 410a, 410b annähernd parallel sind. Damit stimmt die Transmissionsebene 414 mit der Polarisationsebene der Bildpunkte 210a, 210b, 210c des ersten Bildes 210 überein. Die Polarisationsebene der Bildpunkte 220a, 220b, 220c des zweiten Bildes 220 schließt mit den Polarisationsachse 410a, 410b der polarisierten Brillengläser 410a, 410b einen Winkel von 90° ein bzw. stimmt mit der Polarisationsebene überein, sodass das zweite Bild 220 nur mit sehr geringer Intensität wahrgenommen wird.

In diesem ersten Ausführungsbeispiel ist es unerheblich, ob die polarisierenden Brillengläser 410a, 410b in der Fassung 402 wie in Figur 6b) gezeigt in örtlicher Nähe zum Probanden 170 platziert werden oder wie in Figur 6c) in örtlicher Nähe zur Bilderzeugungseinrichtung 100 platziert werden.

In einem weiteren graphisch nicht dargestellten Ausführungsbeispiel werden zwei formidentische Bilder mit einer Intensitätsverteilung B1(x,y) und B2(x,y) im Computer erzeugt. x und y sind dabei der Index der Spalte bzw. Zeile am Display, der Funktionswert B1 bzw. B2 an einem solchen Punkt x,y gibt die Helligkeit eines Bildpunktes an, bzw. bei farbiger Darstellung die Helligkeit der jeweiligen Farbe Rot, Grün, und Blau. Das Bild B1 unterscheidet sich nur in den optischen Eigenschaften von Bild B2. Insbesondere zeigt das Bild B1 verminderte Reflexe, verminderte Blendungen oder ähnliches. Mathematisch gilt für jeden Punkt x,y, dass B2(x,y)>=B1(x,y) ist.

Wird nun ein erstes polarisiertes Bild 210 durch die Intensitätsverteilung B1(x,y) und ein zweites polarisiertes Bild 220 durch die Intensitätsverteilung B2(x,y)-B1(x,y) dargestellt, so ergibt sich das entstehende überlagerte polarisierte Bild 230 zu einer Intensitätsverteilung B2(x,y).

Wenn zwischen den Augen 161a, 161b des Probanden 160 und der Bilderzeugungseinrichtung 100 keinerlei polarisierendes Element, wie beispielsweise polarisierende Brillengläser 410a, 410b in einer Fassung 402, positioniert ist, so wird das überlagerte polarisierte Bild 230, also die Intensitätsverteilung B2(x,y) wahrgenommen.

Wenn sich zwischen den Augen 161a, 161b des Probanden 160 und dem Display 110 polarisierende Brillengläser 410a, 410b befinden, welche wie bei Sonnenbrillen gewünscht, für beide polarisierende Brillengläser 410a, 410b eine definierte Polarisationsachse 411a, 411b von jeweils 90° aufweisen bzw. jeweils eine horizontal ausgerichtete, parallel zu einer Fassungshorizontalen 401 liegende Polarisationsebene aufweist, welche durch Markierungen 412, 412a, 412b gekennzeichnet sein kann, so wird bei hohem Polarisationsgrad P nur das erste Bild 210, also die Intensitätsverteilung B1(x,y) zur Anzeige gebracht, da für diesen Fall die Polarisationsebene der Bildpunkte 210a, 210b, 210c des ersten Bildes 210 zu der Polarisationsachse 411 a der polarisierten Brillengläser 410a, 410b annähernd parallel ist. Damit stimmt die Transmissionsebene 414 mit der Polarisationsebene der Bildpunkte 210a, 210b, 210c des ersten Bildes 210 überein. Die Polarisationsebene der Bildpunkte 220a, 220b, 220c des zweiten Bildes 220 schließt mit den Polarisationsachse 410a, 410b der polarisierten Brillengläser 410a, 410b einen Winkel von 90° ein bzw. stimmt mit der Polarisationsebene überein, sodass das zweite Bild 220 nur mit sehr geringer Intensität wahrgenommen wird.

Bei polarisierenden Brillengläsern 410a, 410b in einer Fassung 402 mit einer für beide polarisierende Brillengläser 410a, 410b definierten Polarisationsachse 411a, 411b, welche von 90° verschieden ist, oder bei geringem Polarisationsgrad P oder bei anderen Qualitätsmängeln, wie etwa uneinheitlichem Verlauf des Polarisationsgrads über der Oberfläche der Brillengläser 410a, 410b, sieht der Brillenträger 170 eine Überlagerung des ersten und zweiten Bildes 210, 220, wie sie in Figur 8c) gezeigt ist. Ein direkter Vergleich zwischen verschiedenen Qualitäten von polarisierenden Brillengläsern 410a, 410b wird damit möglich.

Bei gänzlich von 90° abweichender Polarisationsachse 411a, 411b der polarisierenden Brillengläser 410a, 410b bzw. gänzlich von der Fassungshorizontalen 401 abweichenden Polarisationsebene, ist es möglich, dass das zweite Bild 220 mit höherer Intensität wahrgenommen wird wie das erste Bild 210. Dieser Fall ist in der Figur 8d) gezeigt.

Figur 8e) zeigt ein Beispiel für einen realistischen Fall des Seheindrucks mit polarisierenden Brillengläsern 410a, 410b von geringer Qualität wie er aus vielen Experimenten bekannt ist. Dabei ist der Seheindruck durch das polarisierende Brillenglas 410 mit einer Polarisationsachse 411 a gezeigt. In der Mitte des polarisierenden Brillenglases 410 wird noch überwiegend das erste polarisierende Bildmuster 210 angezeigt. Im vorliegenden Beispiel ist in der Mitte nur die Farbe Grün zu sehen. Am Rand des polarisierenden Brillenglases 410 ist bereits eine Überlagerung des ersten und zweiten Bildes 210, 220 zu sehen. Der Farbeindruck ist bereits Gelb. Zusätzlich sind Inhomogenitäten des polarisierenden Brillenglases 410 zu erkennen, welche in Form von Zonen mit geringem Polarisationsgrad 800a, 800b, 800c, 800d sichtbar werden.

Es ist demnach mit der vorliegenden Erfindung möglich, verschiedene Mängel an polarisierenden Brillengläsern 410a, 410b sichtbar zu machen.

Die Figur 9 zeigt in Verbindung mit den Figuren 10 und 11 eine Vorrichtung 100, mit der ein dreidimensionaler Seheindruck für einen Betrachter 170 erzeugt werden kann. Die Figur 9 ist ein Teilschnitt der in der Figur 1 gezeigten Anordnung umfassend die erfindungsgemäße Vorrichtung 100 und den Probanden 170 entlang der Linie I-I in Figur 1.

Das in der Figur 9 gezeigte Display 110 umfasst eine Anordnung 1230 einer Vielzahl an Bildpunkten 210a, 210b, 210c, ...1210a, 1210b, 1210c, ..., 220a, 220b, 220c, ...1220a, 1220b, 1220c, ..., die schachbrettmusterartig angeordnet sind, wie die Figur 10 auszugsweise in Draufsicht zeigt. Die Bildpunkte 210a, 210b, 210c, 210d, 210m, 210n, ... sowie 220a, 220b, 220c, 220d, 220m, 220n ... sind zur ausschließlichen Betrachtung durch das linke Auge 161 a, die Bildpunkte 1210a, 1210b, 1210c, 1210d, 1210m, 1210n, ... sowie 1220a, 1220b, 1220c, 1220d, 1220m, 1220n ... sind zur ausschließlichen Betrachtung durch das rechte Auge 161b vorgesehen. Licht 25a, 25b, das durch die Bildpunkte 210a, 210b, 210c, ...1210a, 1210b, 1210c in Richtung des Betrachters 170 aus dem Display 110 austritt, weist eine lineare Polarisierung mit vertikaler Polarisationsrichtung auf. Licht 25a, 25b, das durch die Bildpunkte 220a, 220b, 220c, ...1220a, 1220b, 1220c, ... in Richtung des Betrachters 170 aus dem Display 110 austritt, weist eine lineare Polarisierung mit horizontaler Polarisationsrichtung auf.

Damit ergibt sich für jedes Auge 161a, 161b ein überlagertes Bild 230, 1230 mit horizontal und vertikal polarisierten Bildpunkten 210a, 210b, 210c, ...1210a, 1210b, 1210c, ..., 220a, 220b, 220c, ... 1220a, 1220b, 1220c, ...so wie dies oben zur Figur 2 bereits ausführlich beschrieben wurde.

Das Display 110 ist im vorliegenden Ausführungsbeispiel mit einer ein Blendensystem bildenden Parallaxenmaske 37 ausgestattet. Die Maske 37 des Blendensystems 36 ist auf einem durchsichtigen Trägerelement 38 angeordnet. Die Figur 11 zeigt einen Abschnitt dieser Maske 37 für das Blendensystem in Draufsicht.

Die Maske 37 hat zueinander versetzt angeordnete Bereiche 90a, 90b, 90c, .... , die für das Licht 25a, 25b der Bildpunkte 210a, 210b, 210c, ...1210a, 1210b, 1210c, ..., 220a, 220b, 220c, ...1220a, 1220b, 1220c, ...des Displays 110 undurchlässig sind. Die Bereiche 92a, 92b, 92c, ... der Maske 37 sind komplementär zu den Bereichen 90a, 90b, 90c, .... Für das Licht 25a, 25b des Displays 110 sind die Bereiche 92a, 92b, 92c, ... durchlässig.

Die Bereiche 90a, 90b, 90c, ... einerseits und die Bereiche 92a, 92b, 92c, ... , 94b, 94c, ... andererseits haben jeweils ähnlich wie die Bildpunkte 210a, 210b, 210c, ...1210a, 1210b, 1210c, ..., 220a, 220b, 220c, ...1220a, 1220b, 1220c, ... eine Rechteckform. Die Bereiche 90a, 90b, 90c, ... und 92a, 92b, 92c sind in aufeinanderfolgenden Zeilen 94 angeordnet. In zueinander benachbarten Zeilen 94a, 94b; 94b, 94c sind die für das Licht durchlässigen Bereiche 92a, 92b, 92c, .. zu den für das Licht 25a, 25b undurchlässigen Bereichen 90a, 90b, 90c, ... versetzt positioniert. Die Breite $B_{Mu}$ der für das Licht 25a, 25b undurchlässigen Bereiche 92a. 92b. 92c, ... ist größer als die Breite $B_{Md}$ der Bereiche, die für das Licht 25a, 25b durchlässig sind. Bevorzugt gilt hier:

$$B_{Md} = \tfrac{1}{2} B_{Mu} \qquad (1)$$

Mit den für das Licht des Displays 110 durchlässigen und undurchlässigen rechteckförmigen Bereichen 90a, 90b, 90c; 92a, 92b, 92c trennt die Maske 37 das Licht 25a, 25b für das linke und rechte Auge 161a, 161b des Probanden 170 in der Lichtdurchtrittsebene 41. Die Lichtdurchtrittsebene 41 der Maske 37 ist in dem Display 110 frei verlagerbar. Hierzu enthält das Display 110 eine (nicht dargestellte) Verstelleinrichtung für das Blendensystem. Mit der Verstelleinrichtung kann das Blendensystem entsprechend dem in der Figur 9 gezeigten Doppelpfeil 43 in der horizontalen Richtung und in der zu der Richtung des Doppelpfeils 43 senkrechten horizontalen Richtung bewegt werden. Für das Verstellen enthält die Verstelleinrichtung einen piezoelektrischen Antrieb, der über eine Treiberbaugruppe mittels des Rechners 150 in Abhängigkeit einer mit einer nicht dargestellten Kamera erfassten Winkelposition $\alpha$ der Augen 161a, 161b des Probanden 170 von dem Display 110 gesteuert werden kann. Die Verstelleinrichtung ermöglicht es, den Abstand z der Ebene 42 des Displays 110 von der Lichtdurchtrittsebene 41 der Blende 37 in dem Bereich 8 mm $\leq$ z $\leq$ 15 mm zu variieren. Entsprechend der mittels dem Computer 150 und der nicht dargestellten Kamera erfassten Zentrum 27 der Pupillendistanz PD wird mit der Verstelleinrichtung das Blendensystem so eingestellt und nachgeführt, dass die Gerade 29 durch die Punkte 27 und die vertikale Linie 31 hinter der Blende 37 auf der Ebene 42 des Displays 110 die Grenze zweier benachbarter Display-Zonen 210a/220a, 1210a/1220a, 210b/1210b ... trifft. Die Position der Display-Zonen 210a/220a, 210b/1210b ... und der Display-Zonen 1210a/1220a, 1210b/1220b,... des Displays 110 wird dabei der Verlagerung der Maske 37 angepasst. Für das Verstellen des Blendensystems bestimmt der Computer 150 aus dem Winkel $\gamma$, unter dem die Kamera das Zentrum 27 der Pupillendistanz PD in Bezug auf die Flächennormale 29 in dem Zentrum 31 der Maske 37 erfasst, eine günstige horizontale Verschiebung V der Maske 37 parallel zu der Richtung 39, d.h. senkrecht zur Zeichnungsebene und parallel zu der Lichtdurchtrittsebene 41 mit

$$V := z \tan \gamma \,. \qquad (2)$$

Die günstige Verschiebung der Maske 37 genügt also folgender Beziehung:

$$V/z = S/g \qquad (3)$$

Dabei ist S die Ablage des Zentrums der senkrechten Projektion der Pupillendistanz PD in der der Ebene 41 der Maske 37 von der Flächennormale 29 auf der vertikalen Linie 29. g ist der Abstand des Probanden 170 von der Lichtdurchtrittsebene 41 des Blendensystems.

Bezugszeichenliste

| | |
|---|---|
| $\alpha$ | Sehwinkel |
| $\beta$ | Winkel |
| B1 | Intensitätsverteilung |
| B2 | Intensitätsverteilung |
| D | Abstand des Probanden vom Display |
| $B_{Md}$ | Breite der durchlässigen Bereiche der Maske |
| $B_{Mu}$ | Breite der lichtundurchlässigen Bereiche der Maske |
| g | Abstand des Probanden von der Lichtdurchtrittsebene |
| $\gamma$ | Winkel |
| PD | Pupillendistanz |
| S | Ablage |
| V | Verschiebung |
| x | Richtung, Index |
| y | Richtung, Index |
| z | Richtung, Abstand |

| | |
|---|---|
| 25a | Licht für das rechte Auge |
| 25b | Licht für das linke Auge |
| 27 | Punkt |
| 29 | Gerade |
| 31 | Punkt |
| 37 | Maske |
| 38 | Trägerelement |
| 41 | Lichtdurchtrittsebene |
| 42 | Ebene |
| 43 | Doppelpfeil |
| 90a | undurchlässiger Bereich |

| | |
|---|---|
| 90b | undurchlässiger Bereich |
| 90c | undurchlässiger Bereich |
| ... | |
| 92a | durchlässiger Bereich |
| 92b | durchlässiger Bereich |
| 92c | durchlässiger Bereich |
| ... | |
| 100 | Vorrichtung |
| 102 | Bilderzeugungseinrichtung |
| 110 | Display |
| 112a | Bildpunkt |
| 112b | Bildpunkt |
| 112c | Bildpunkt |
| 114 | erstes Bild |
| 116 | zweites Bild |
| 118 | Anzeigebild |
| 120 | Treibergruppe |
| 122a | Motiv des ersten Bildes |
| 122b | Motiv des zweiten Bildes |
| 122 | Motiv |
| 140 | Lichtquelle zum Aktivieren von phototropen Brillengläsern |
| 150 | Rechnereinheit, Computer |
| 152 | Speicher |
| 160 | Nase |
| 161a | rechtes Auge |
| 161b | linkes Auge |
| 170 | Proband |
| | |
| 210 | erstes polarisiertes Bild |
| 210a | Bildpunkt mit einer ersten definierten Polarisationsachse |
| 210b | Bildpunkt mit einer ersten definierten Polarisationsachse |
| 210c | Bildpunkt mit einer ersten definierten Polarisationsachse |
| ... | |
| 220 | zweites polarisiertes Bild |
| 220a | Bildpunkt mit einer zweiten definierten Polarisationsachse |
| 220b | Bildpunkt mit einer zweiten definierten Polarisationsachse |
| 220c | Bildpunkt mit einer zweiten definierten Polarisationsachse |
| ... | |
| 230 | überlagertes polarisiertes Bild |
| | |
| 310 | erstes polarisiertes Bild |
| 310a | Bildpunkt mit einer ersten definierten Polarisationsachse |
| 310b | Bildpunkt mit einer ersten definierten Polarisationsachse |
| 310c | Bildpunkt mit einer ersten definierten Polarisationsachse |
| ... | |
| 320 | zweites polarisiertes Bild |
| 320a | Bildpunkt mit einer zweiten definierten Polarisationsachse |
| 320b | Bildpunkt mit einer zweiten definierten Polarisationsachse |
| 320c | Bildpunkt mit einer zweiten definierten Polarisationsachse |
| ... | |
| 330 | überlagertes polarisiertes Bild |
| 330a | Bildpunkt mit durch Vektoraddition ermittelter Polarisationsachse |
| 330b | Bildpunkt mit durch Vektoraddition ermittelter Polarisationsachse |
| 330c | Bildpunkt mit durch Vektoraddition ermittelter Polarisationsachse |
| ... | |
| 400 | Brille |
| 402 | Fassung |
| 404 | Fassungshorizontale |

410 polarisierendes Brillenglas
410a polarisierendes Brillenglas für das rechte Auge
410b polarisierendes Brillenglas für das linke Auge
411 Polarisationsachse
411a Polarisationsachse
411b Polarisationsachse
412 Markierungen
412a Markierungen
412b Markierungen
413 Polarisationsebene
414 Transmissionsebene
416 auf Brillenglas auftreffendes Licht
416a Polarisationsrichtung
416b Polarisationsrichtung
417 Brillenglas transmittierendes Licht
417a Polarisationsrichtung
418 Ausbreitungsrichtung
420 polarisierende Brillengläser in einer Fassung

502 Verfahrensschritt
504 Verfahrensschritt
506 Verfahrensschritt
508 Verfahrensschritt
510 Verfahrensschritt
512 Verfahrensschritt
514 Verfahrensschritt
516 Verfahrensschritt
518 Verfahrensschritt

800a Zone mit geringem Polarisationsgrad
800b Zone mit geringem Polarisationsgrad
800c Zone mit geringem Polarisationsgrad
800d Zone mit geringem Polarisationsgrad

1210 erstes polarisiertes Bild für das rechte Auge
1210a Bildpunkt mit einer ersten definierten Polarisationsachse
1210b Bildpunkt mit einer ersten definierten Polarisationsachse
1210c Bildpunkt mit einer ersten definierten Polarisationsachse
...
1220 zweites polarisiertes Bild für das linke Auge
1220a Bildpunkt mit einer zweiten definierten Polarisationsachse
1220b Bildpunkt mit einer zweiten definierten Polarisationsachse
1220c Bildpunkt mit einer zweiten definierten Polarisationsachse
...
1230 überlagertes polarisiertes Bild

**Patentansprüche**

**1.** Vorrichtung (100) zur Demonstration des Seheindrucks für einen Träger (170) einer Brille (400) mit polarisierenden Brillengläsern (410a, 410b) mit

a) einem Speicher (152) zum Bereitstellen eines ersten Bildes (114, 210, 310) mit einem Motiv und einer zugehörigen Information zu einer ersten Polarisationsrichtung, mit der das erste Bild (114, 210, 310) angezeigt werden soll,
b) einem Speicher (152) zum Bereitstellen eines zweiten Bildes (116, 220, 320) mit demselben Motiv und einer zugehörigen Information zu einer zweiten von der ersten Polarisationsrichtung verschiedenen Polarisationsrichtung, mit der das zweite Bild (116, 220, 320) angezeigt werden soll,

c) einer Anzeigeeinrichtung (110) zum Anzeigen des ersten Bildes (114, 210, 310) mit in der ersten Polarisationsrichtung polarisiertem Licht und des zweiten Bildes (116, 220, 320) mit in der zweiten Polarisationsrichtung polarisiertem Licht in überlagerter Darstellung (118, 230, 330), so dass das Motiv des ersten Bildes (114, 210, 310) und das Motiv des zweiten Bildes (116, 220, 320) formidentisch zusammenfallen, wobei eines der Bilder (114, 116; 210, 220; 310, 320) so gewählt ist, dass es das Motiv zeigt, wie es mit einer polarisierenden Brille wahrgenommen wird und das andere der Bilder (114, 116; 210, 220; 310, 320) so gewählt ist, dass die überlagerte Darstellung (118, 230, 330) der Bilder (114, 116; 210, 220; 310, 320) das Motiv zeigt, wie es ohne eine polarisierende Brille wahrgenommen wird.

**2.** Vorrichtung (100) nach Anspruch 1, **dadurch gekennzeichnet, dass** das erste Bild (114, 210, 310) eine fotographische Aufnahme einer Kamera mit vorgeschaltetem Polarisationsfilter mit einer ersten Polarisationsachse ist und/oder dass das zweite Bild (116, 220, 320) eine fotographische Aufnahme einer Kamera mit vorgeschaltetem Polarisationsfilter mit einer zweiten von der ersten Polarisationsachse verschiedenen Polarisationsachse ist.

**3.** Vorrichtung (100) nach einem der vorangegangenen Ansprüche, **dadurch gekennzeichnet, dass** sich das erste Bild (114, 210, 310) und das zweite Bild (116, 220, 320) in wenigstens einer optischen Eigenschaft, insbesondere in wenigstens einer der optischen Eigenschaften aus der Gruppe Kontrast, Helligkeit, Sättigung und Farbton unterscheiden.

**4.** Vorrichtung (100) nach einem der vorangegangenen Ansprüche, **dadurch gekennzeichnet, dass** das angezeigte erste Bild (114, 210) aus ersten in der Art der Felder einer einzigen der Farben eines Schachbrettmusters angeordneten Bildpunkten (112a, 112c, 210a, 210b, 210c, 210d, 210e) besteht und dass das angezeigte zweite Bild (116, 220) aus zweiten in der Art der Felder der anderen Farbe des Schachbrettmusters angeordneten Bildpunkten (112b, 220a, 220b, 220c, 220d, 220e) besteht.

**5.** Vorrichtung (100) nach einem der Ansprüche 1 bis 3, **dadurch gekennzeichnet, dass** das erste Bild (114, 310) aus in der Art der Felder eines Schachbrettmusters angeordneten Bildpunkten (112a, 112b, 112c, 310a, 310b, 310c, ...) besteht und dass das zweite Bild (116, 320) aus denselben Bildpunkten (112a, 112b, 112c, 320a, 320b, 320c,..) besteht und dass die jeweiligen angezeigten Bildpunkte (330a, 330b, 330c,...) die Information des entsprechenden Bildpunktes (310a, 310b, 310c,...) des ersten Bildes (114, 310) und die Information des entsprechenden Bildpunktes (320a, 320b, 320c,..) des zweiten Bildes (116, 320) enthält, wobei die Polarisationsrichtung der Vektoraddition der die Intensität berücksichtigenden Polarisationsrichtungsvektoren der entsprechenden Bildpunkte (310a, 310b, 310c,..., 320a, 320b, 320c,..) des ersten Bildes (114, 310) und des zweiten Bildes (116, 320) entspricht.

**6.** Vorrichtung (100) nach einem der vorangegangenen Ansprüche, **dadurch gekennzeichnet, dass** eine Optikbaugruppe (37) vorgesehen ist, die das von einer ersten Gruppe vorbestimmter Bereiche (210a, 210b, 210c, 210d, 210m, 210n,... sowie 220a, 220b, 220c, 220d, 220m, 220n) der Anzeigeeinrichtung (110) dem optischen Strahlengang zugeführte Licht (25a) von dem Licht (25b) trennt, das dem Strahlengang von einer zweiten Gruppe vorbestimmter Bereiche (1210a, 1210b, 1210c, 1210d, 1210m, 1210n,... 1220a, 1220b, 1220c, 1220d, 1220m, 1220n...) der Anzeigeeinrichtung (110) zugeführt ist, um dem linken Auge (161a) des Trägers (170) das Licht (25a) aus der ersten Gruppe ausgewählter Bereiche (210a, 210b, 210c, 210d, 210m, 210n, ... , 220a, 220b, 220c, 220d, 220m, 220n) der Anzeigeeinrichtung (110) zuzuführen und das Licht (25b) aus der zweiten Gruppe ausgewählter Bereiche der Anzeigeeinrichtung (110) zu dem rechten Auge (161b) des Trägers (170) zu leiten.

**7.** Vorrichtung (100) nach einem der vorangegangenen Ansprüche, **dadurch gekennzeichnet, dass** eine Lichtquelle (140) zum Aktivieren von phototropen Brillengläsern (410a, 410b) vorhanden ist.

**8.** Verfahren zur Demonstration des Seheindrucks für einen Träger (170) einer Brille (400) mit polarisierenden Brillengläsern (410a, 410b), umfassend die Schritte:

a) Bereitstellen (512) eines ersten Bildes (114, 210, 310) mit einem Motiv und einer zugehörigen Information zu einer ersten Polarisationsrichtung, mit der das erste Bild (114, 210, 310) angezeigt werden soll,
b) Bereitstellen (512) eines zweiten Bildes (116, 220, 320) mit demselben Motiv und einer zugehörigen Information zu einer zweiten von der ersten Polarisationsrichtung verschiedenen Polarisationsrichtung, mit der das zweite Bild (116, 220, 320) angezeigt werden soll,
c) Anzeigen (514) des ersten Bildes (114, 210, 310) mit in der ersten Polarisationsrichtung polarisiertem Licht und des zweiten Bildes (116, 220, 310) mit in der zweiten Polarisationsrichtung polarisiertem Licht in überlagerter Darstellung (118,230,330), so dass das Motiv des ersten Bildes (114, 210, 310) und das Motiv des zweiten Bildes (116, 220, 310) formidentisch zusammenfallen, wobei eines der Bilder (114, 116; 210, 220; 310, 320) so gewählt ist, dass es das Motiv zeigt, wie es mit einer polarisierenden Brille wahrgenommen wird und das andere der Bilder (114, 116; 210, 220; 310, 320) so gewählt ist, dass die überlagerte Darstellung (118, 230, 330) der Bilder (114, 116; 210, 220; 310, 320) das Motiv zeigt, wie es ohne eine polarisierende Brille wahrgenommen wird,
d)Betrachten der Bilder mit und ohne polarisierende Brille.

**9.** Verfahren nach Anspruch 8, **dadurch gekennzeichnet, dass** als erstes Bild (114, 210, 310) eine fotographische Aufnahme einer Kamera mit vorgeschaltetem Polarisationsfilter mit einer ersten Polarisationsachse verwendet wird und/oder dass als zweites Bild (116, 220, 320) eine fotographische Aufnahme einer Kamera mit vorgeschaltetem Polarisationsfilter mit einer zweiten von der ersten Polarisationsachse verschiedenen Polarisationsachse verwendet wird.

**10.** Verfahren nach einem der Ansprüche 8 oder 9, **dadurch gekennzeichnet, dass** sich das erste Bild (114, 210, 310) und das zweite Bild (116, 220, 320) in wenigstens einer optischen Eigenschaft, insbesondere in wenigstens einer der optischen Eigenschaften aus der Gruppe Kontrast, Helligkeit, Sättigung und Farbton unterscheiden.

**11.** Verfahren nach einem der Ansprüche 8 bis 10, **dadurch gekennzeichnet, dass** das angezeigte erste Bild (114, 210) aus ersten in der Art der Felder einer einzigen der Farben eines Schachbrettmusters angeordneten Bildpunkten (112a, 112c, 210a, 210b, 210c,...) besteht und dass das angezeigte zweite Bild (116, 220) aus zweiten in der Art der Felder der anderen Farbe des Schachbrettmusters angeordneten Bildpunkten (112b, 220a, 220b, 220c,...) besteht.

**12.** Verfahren nach einem der Ansprüche 8 bis 10, **dadurch gekennzeichnet, dass** das erste Bild (114, 310) aus in der Art der Felder eines Schachbrettmusters angeordneten Bildpunkten (112a, 112b, 112c, 310a, 310b, 310c,...) besteht und dass das zweite Bild (116, 320) aus denselben Bildpunkten (112a, 112b, 112c, 320a, 320b, 320c, ...) besteht und dass die jeweiligen angezeigten Bildpunkte (112a, 112b, 112c, 330a, 330b, 330c,...) die Information des entsprechenden Bildpunktes (112a, 112b, 112c, 310a, 310b, 310c,...) des ersten Bildes (114, 310) und die Information des entsprechenden Bildpunktes (112a, 112b, 112c, 320a, 320b, 320c, ...) des zweiten Bildes (116, 320) enthält, wobei die Polarisationsrichtung der Vektoraddition der die Intensität berücksichtigenden Polarisationsrichtungsvektoren der entsprechenden Bildpunkte (112a, 112b, 112c, 310a, 310b, 310c,..., 320a, 320b, 320c, ...) des ersten Bildes (114,310) und des zweiten Bildes (116, 320) entspricht.

**13.** Verfahren nach einem der Ansprüche 8 bis 12, **dadurch gekennzeichnet, dass** die erste Polarisationsrichtung horizontal und die zweite Polarisationsrichtung vertikal ausgerichtet wird.

**14.** Verfahren nach einem der Ansprüche 8 bis 13, **gekennzeichnet durch** den Schritt: d) Positionieren (516) des Trägers (170) zum Betrachten der angezeigten Bilder (114, 210, 310, 116, 220, 320) in überlagerter Darstellung (118, 230, 330) wahlweise mit dem bloßen Auge (161a, 161b) und/oder **durch** eine Brille mit nicht-polarisierenden Brillengläsern und/oder **durch** die Brille (400) mit den polarisierenden Brillengläsern (410a, 410b).

**15.** Verfahren nach Anspruch 14, **dadurch gekennzeichnet, dass** die polarisierenden Brillengläser phototrope Brillengläser (410a, 410b) sind und dass eine die phototropen Brillengläser (410a, 410b) aktivierende Lichtquelle (140) eingeschaltet wird.

**Claims**

**1.** Apparatus (100) for demonstrating the visual impression for a wearer (170) of spectacles (400) comprising polarizing spectacle lenses (410a, 410b) comprising

a) a memory (152) for providing a first image (114, 210, 310) having a motif and an associated information regarding a first polarization direction, with which the first image (114, 210, 310) is intended to be displayed,
b) a memory (152) for providing a second image (116, 220, 320) having the same motif and an associated information regarding a second polarization direction, which is different from the first polarization direction and with which the second image (116, 220, 320) is intended to be displayed,
c) a display device (110) for displaying the first image (114, 210, 310) with light polarized in the first polarization direction and the second image (116, 220, 320) with light polarized in the second polarization direction in a superimposed representation (118, 230, 330), such that the motif of the first image (114, 210, 310) and the motif of the second image (116, 220, 320) coincide dimensionally identically, wherein one of the images (114, 116; 210, 220; 310, 320) is chosen such that it shows the motif in the way it is perceived with polarizing spectacles and the other of the images (114, 116; 210, 220; 310, 320) is chosen such that the superimposed representation (118, 230, 330) of the images (114, 116; 210, 220; 310, 320) shows the motif in the way it is perceived without polarizing spectacles.

**2.** Apparatus (100) according to Claim 1, **characterized in that** the first image (114, 210, 310) is a photographic recording from a camera with, disposed in front, a polarization filter having a first polarization axis and/or **in that** the second image (116, 220, 320) is a photographic recording from a camera with, disposed in front, a polarization filter having a second polarization axis, which is different from the first polarization axis.

**3.** Apparatus (100) according to either of the preceding claims, **characterized in that** the first image (114, 210, 310) and the second image (116, 220, 320) differ in at least one optical property, in particular in at least one of the optical properties from the group contrast, brightness, saturation and hue.

**4.** Apparatus (100) according to any of the preceding claims, **characterized in that** the displayed first image (114, 210) consists of first pixels (112a, 112c, 210a, 210b, 210c, 210d, 210e) arranged in the manner of the fields of a single one of the colors of a checkerboard pattern, and **in that** the displayed second image (116, 220) consists of second pixels (112b, 220a, 220b, 220c, 220d, 220e) arranged in the manner of the fields of the other color of the checkerboard pattern.

**5.** Apparatus (100) according to any of Claims 1 to 3, **characterized in that** the first image (114, 310) consists of pixels (112a, 112b, 112c, 310a, 310b, 310c, ...) arranged in the manner of the fields of a checkerboard pattern, and **in that** the second image (116, 320) consists of the same pixels (112a, 112b, 112c, 320a, 320b, 320c, ...), and **in that** the respective displayed pixels (330a, 330b, 330c, ...) contain the information of the corresponding pixel (310a, 310b, 310c, ...) of the first image (114, 310) and the information of the corresponding pixel (320a, 320b, 320c, ...) of the second image (116, 320), wherein the polarization direction corresponds to the vector addition of the polarization direction vectors - taking account of the intensity - of the corresponding pixels (310a, 310b, 310c, ..., 320a, 320b, 320c, ...) of the first image (114, 310) and of the second image (116, 320).

**6.** Apparatus (100) according to any of the preceding claims, **characterized in that** an optical assembly (37) is provided, which separates the light (25a) fed to the optical beam path from a first group of predetermined regions (210a, 210b, 210c, 210d, 210m, 210n, ..., and 220a, 220b, 220c, 220d, 220m, 220n) of the display device (110) from the light (25b) fed to the beam path from a second group of predetermined regions (1210a, 1210b, 1210c, 1210d, 1210m, 1210n, ... 1220a, 1220b, 1220c, 1220d, 1220m, 1220n ...) of the display device (110), in order to feed the light (25a) from the first group of selected regions (210a, 210b, 210c, 210d, 210m, 210n, ..., 220a, 220b, 220c, 220d, 220m, 220n) of the display device (110) to the left eye (161a) of the wearer (170) and to guide the light (25b) from the second group of selected regions of the display device (110) to the right eye (161b) of the wearer (170).

**7.** Apparatus (100) according to any of the preceding claims, **characterized in that** a light source (140) for activating phototropic spectacle lenses (410a, 410b) is present.

**8.** Method for demonstrating the visual impression for a wearer (170) of spectacles (400) comprising polarizing spectacle lenses (410a, 410b), comprising the following steps:

a) providing (512) a first image (114, 210, 310) having a motif and an associated information regarding a first polarization direction, with which the first image (114, 210, 310) is intended to be displayed,
b) providing (512) a second image (116, 220, 320) having the same motif and an associated information regarding a second polarization direction, which is different from the first polarization direction and with which the second image (116, 220, 320) is intended to be displayed,
c) displaying (514) the first image (114, 210, 310) with light polarized in the first polarization direction and the second image (116, 220, 310) with light polarized in the second polarization direction in a superimposed representation (118, 230, 330), such that the motif of the first image (114, 210, 310) and the motif of the second image (116, 220, 310) coincide dimensionally identically, wherein one of the images (114, 116; 210, 220; 310, 320) is chosen such that it shows the motif in the way it is perceived with polarizing spectacles and the other of the images (114, 116; 210, 220; 310, 320) is chosen such that the superimposed representation (118, 230, 330) of the images (114, 116; 210, 220; 310, 320) shows the motif in the way it is perceived without polarizing spectacles,
d)viewing the images with and without polarizing spectacles.

9. Method according to Claim 8, **characterized in that** a photographic recording from a camera with, disposed in front, a polarization filter having a first polarization axis is used as the first image (114, 210, 310) and/or **in that** a photographic recording from a camera with, disposed in front, a polarization filter having a second polarization axis, which is different from the first polarization axis, is used as the second image (116, 220, 320).

10. Method according to either of Claims 8 and 9, **characterized in that** the first image (114, 210, 310) and the second image (116, 220, 320) differ in at least one optical property, in particular in at least one of the optical properties from the group contrast, brightness, saturation and hue.

11. Method according to any of Claims 8 to 10, **characterized in that** the displayed first image (114, 210) consists of first pixels (112a, 112c, 210a, 210b, 210c, ...) arranged in the manner of the fields of a single one of the colors of a checkerboard pattern, and **in that** the displayed second image (116, 220) consists of second pixels (112b, 220a, 220b, 220c, ...) arranged in the manner of the fields of the other color of the checkerboard pattern.

12. Method according to any of Claims 8 to 10, **characterized in that** the first image (114, 310) consists of pixels (112a, 112b, 112c, 310a, 310b, 310c, ...) arranged in the manner of the fields of a checkerboard pattern, and **in that** the second image (116, 320) consists of the same pixels (112a, 112b, 112c, 320a, 320b, 320c, ...), and **in that** the respective displayed pixels (112a, 112b, 112c, 330a, 330b, 330c, ...) contain the information of the corresponding pixel (112a, 112b, 112c, 310a, 310b, 310c, ...) of the first image (114, 310) and the information of the corresponding pixel (112a, 112b, 112c, 320a, 320b, 320c, ...) of the second image (116, 320), wherein the polarization direction corresponds to the vector addition of the polarization direction vectors - taking account of the intensity - of the corresponding pixels (112a, 112b, 112c, 310a, 310b, 310c, ..., 320a, 320b, 320c, ...) of the first image (114, 310) and of the second image (116, 320).

13. Method according to any of Claims 8 to 12, **characterized in that** the first polarization direction is oriented horizontally and the second polarization direction is oriented vertically.

14. Method according to any of Claims 8 to 13, **characterized by** the following step:

d) positioning (516) the wearer (170) for viewing the displayed images (114, 210, 310, 116, 220, 320) in a superimposed representation (118, 230, 330) optionally with the naked eye (161a, 161b) and/or through spectacles comprising non-polarizing spectacle lenses and/or through the spectacles (400) comprising the polarizing spectacle lenses (410a, 410b).

15. Method according to Claim 14, **characterized in that** the polarizing spectacle lenses are phototropic spectacle lenses (410a, 410b), and **in that** a light source (140) that activates the phototropic spectacle lenses (410a, 410b) is switched on.

## Revendications

1. Dispositif (100) destiné à démontrer la perception visuelle pour un porteur (170) de lunettes (400) avec des verres de lunettes (410a, 410b) polarisants, avec

a) une mémoire (152) destinée à mettre à disposition une première image (114, 210, 310) avec un motif et une information correspondante dans une première direction de polarisation avec laquelle la première image (114, 210, 310) est censée être reproduite,
b) une mémoire (152) destinée à mettre à disposition une deuxième image (116, 220, 320) avec le même motif et une information correspondante dans une deuxième direction de polarisation différente de la première direction de polarisation, avec laquelle la deuxième image (116, 220, 320) est censée être reproduite,
c) un système d'affichage (110) destiné à afficher la première image (114, 210, 310) avec de la lumière polarisée dans la première direction de polarisation et la deuxième image (116, 220, 320) avec de la lumière polarisée dans la deuxième direction de polarisation en représentation superposée (118, 230, 330), de sorte que le motif de la première image (114, 210, 310) et le motif de la deuxième image (116, 220, 320) coïncident en une forme identique, l'une des images (114, 116 ; 210, 220 ; 310, 320) étant choisie de telle sorte qu'elle montre le motif tel qu'il est perçu avec des lunettes polarisantes et l'autre des images (114, 116 ; 210, 220 ; 310, 320) étant choisie de telle sorte que la représentation superposée (118, 230, 330) des images (114, 116 ; 210, 220 ; 310, 320) montre le motif tel qu'il est perçu sans lunettes polarisantes.

**2.** Dispositif (100) selon la revendication 1, **caractérisé en ce que** la première image (114, 210, 310) est un premier cliché photographique d'un appareil de prise de vue avec filtre polarisant monté en amont dans un premier axe de polarisation et/ou **en ce que** la deuxième image (116, 220, 320) est un cliché photographique d'un appareil de prise de vue avec filtre polarisant monté en amont, dans un deuxième axe de polarisation différent du premier axe de polarisation.

**3.** Dispositif (100) selon l'une quelconque des revendications précédentes, **caractérisé en ce que** la première image (114, 210, 310) et la deuxième image (116, 220, 320) se différencient par au moins une propriété optique, notamment par au moins l'une des propriétés optiques du groupe : contraste, luminosité, saturation et nuance de couleur.

**4.** Dispositif (100) selon l'une quelconque des revendications précédentes, **caractérisé en ce que** la première image (114, 210) affichée est constituée de premiers pixels (112a, 112c, 210a, 210b, 210c, 210d, 210e) placés à la manière des zones d'une unique des couleurs d'un motif d'échiquier et **en ce que** la deuxième image affichée (116, 220) est constituée de deuxièmes pixels (112b, 220a, 220b, 220c, 220d, 220e) placés à la manière des zones de l'autre couleur du motif d'échiquier.

**5.** Dispositif (100) selon l'une quelconque des revendications 1 à 3, **caractérisé en ce que** la première image (114, 310) est constituée de pixels (112a, 112b, 112c, 310a, 310b, 310c, ...) placés à la manière des zones d'un motif d'échiquier et **en ce que** la deuxième image (116, 320) est constituée des mêmes pixels (112a, 112b, 112c, 320a, 320b, 320c, ...) et **en ce que** les pixels (330a, 330b, 330c, ...) respectivement affichés contiennent l'information du pixel (310a, 310b, 310c, ...) correspondant de la première image (114,310) et l'information du pixel (320a, 320b, 320c, ...) correspondant de la deuxième image (116, 320), la direction de polarisation correspondant à l'addition de vecteurs des vecteurs de direction de polarisation tenant compte de l'intensité des pixels (310a, 310b, 310c, ..., 320a, 320b, 320c, ...) correspondants de la première image (114, 310) et de la deuxième image (116, 320).

**6.** Dispositif (100) selon l'une quelconque des revendications précédentes, **caractérisé en ce qu'**il est prévu un ensemble optique (37) qui sépare la lumière (25a) amenée au faisceau optique par des zones (210a, 210b, 210c, 210d, 210m, 210n, ... ainsi que 220a, 220b, 220c, 220d, 220m, 220n) prédéfinies par un premier groupe du dispositif d'affichage (110) de la lumière (25b) qui est amenée au faisceau par un deuxième groupe de zones (1210a, 1210b, 1210c, 1210d, 1210m, 1210n, ... 1220a, 1220b, 1220c, 1220d, 1220m, 1220n ...) prédéfinies du système d'affichage (110), pour amener à l'oeil gauche (161a) du porteur (170) la lumière (25a) du premier groupe de zones (210a, 210b, 210c, 210d, 210m, 210n, ..., 220a, 220b, 220c, 220d, 220m, 220n) choisies du système d'affichage (110) et pour diriger vers l'oeil droit (161b) du porteur (170) la lumière (25b) du deuxième groupe de zones choisies du système d'affichage (110).

**7.** Dispositif (100) selon l'une quelconque des revendications précédentes, **caractérisé en ce qu'**une source lumineuse (140) est présente pour activer des verres de lunettes (410a, 410b) phototropiques.

**8.** Procédé destiné à démontrer la perception visuelle pour un porteur (170) de lunettes (400) avec des verres de lunettes (410a, 410b) polarisants, comprenant les étapes :

a) mise à disposition (512) d'une première image (114, 210, 310) avec un motif et une information correspondante dans une première direction de polarisation avec laquelle la première image (114, 210, 310) est censée être reproduite,
b) mise à disposition (512) d'une deuxième image (116, 220, 320) avec le même motif et une information correspondante dans une deuxième direction de polarisation différente de la première direction de polarisation, avec laquelle la deuxième image (116, 220, 320) est censée être reproduite,
c) affichage (514) de la première image (114, 210, 310) avec de la lumière polarisée dans la première direction de polarisation et de la deuxième image (116, 220, 310) avec de la lumière polarisée dans la deuxième direction de polarisation en représentation superposée (118, 230, 330), de sorte que le motif de la première image (114, 210, 310) et le motif de la deuxième image (116, 220, 310) coïncident en une forme identique, l'une des images (114, 116 ; 210, 220 ; 310, 320) étant choisie de telle sorte qu'elle montre le motif tel qu'il est perçu avec des lunettes polarisantes et l'autre des images (114, 116 ; 210, 220 ; 310, 320) étant choisie de telle sorte que la représentation superposée (118, 230, 330) des images (114, 116 ; 210, 220 ; 310, 320) montre le motif tel qu'il est perçu sans lunettes polarisantes,
d) observation des images avec et sans lunettes polarisantes.

**9.** Procédé selon la revendication 8, **caractérisé en ce qu'**en tant que première image (114, 210, 310), on utilise un premier cliché photographique d'un appareil de prise de vue avec filtre polarisant monté en amont dans un premier axe de polarisation et/ou **en ce qu'**en tant que deuxième image (116, 220, 320), on utilise un cliché photographique d'un appareil de prise de vue avec filtre polarisant monté en amont, dans un deuxième axe de polarisation différent du premier axe de polarisation.

**10.** Procédé selon l'une quelconque des revendications 8 ou 9, **caractérisé en ce que** la première image (114, 210, 310) et la deuxième image (116, 220, 320) se différencient par au moins une propriété optique, notamment par au moins l'une des propriétés optiques du groupe : contraste, luminosité, saturation et nuance de couleur.

**11.** Procédé selon l'une quelconque des revendications 8 à 10, **caractérisé en ce que** la première image (114, 210) affichée est constituée de premiers pixels (112a, 112c, 210a, 210b, 210c, ...) placés à la manière des zones d'une unique des couleurs d'un motif d'échiquier et **en ce que** la deuxième image affichée (116, 220) est constituée de deuxièmes pixels (112b, 220a, 220b, 220c, ...) placés à la manière des zones de l'autre couleur du motif d'échiquier.

**12.** Procédé selon l'une quelconque des revendications 8 à 10, **caractérisé en ce que** la première image (114, 310) est constituée de pixels (112a, 112b, 112c, 310a, 310b, 310c, ...) placés à la manière des zones d'un motif d'échiquier et **en ce que** la deuxième image (116, 320) est constituée des mêmes pixels (112a, 112b, 112c, 320a, 320b, 320c, ...) et **en ce que** les pixels (112a, 1112b, 112c, 330a, 330b, 330c, ...) respectivement affichés contiennent l'information du pixel (112a, 112b, 112c, 310a, 310b, 310c, ...) correspondant de la première image (114,310) et l'information du pixel (112a, 112b, 112c, 320a, 320b, 320c, ...) correspondant de la deuxième image (116, 320), la direction de polarisation correspondant à l'addition de vecteurs des vecteurs de direction de polarisation tenant compte de l'intensité des pixels (112a, 112b, 112c, 310a, 310b, 310c, ..., 320a, 320b, 320c, ...) correspondants de la première image (114, 310) et de la deuxième image (116, 320).

**13.** Procédé selon l'une quelconque des revendications 8 à 12, **caractérisé en ce que** la première direction de polarisation et la deuxième direction de polarisation sont orientées à la verticale.

**14.** Procédé selon l'une quelconque des revendications 8 à 13, **caractérisé par** l'étape :

d) positionnement (516) du porteur (170) pour l'observation des images (114, 210, 310, 116, 220, 320) en représentation superposée (118, 230, 330), au choix à l'oeil nu (161a, 161b) et/ou avec des lunettes à verres de lunettes non polarisants et/ou avec les lunettes (400) avec des verres de lunettes (410a, 410b) polarisants.

**15.** Procédé selon la revendication 14, **caractérisé en ce que** les verres de lunettes polarisants sont des verres de lunettes (410a, 410b) phototropiques et **en ce qu'**on active une source lumineuse (140) activant les verres de lunettes (410a, 410b) phototropiques.

FIG.1a

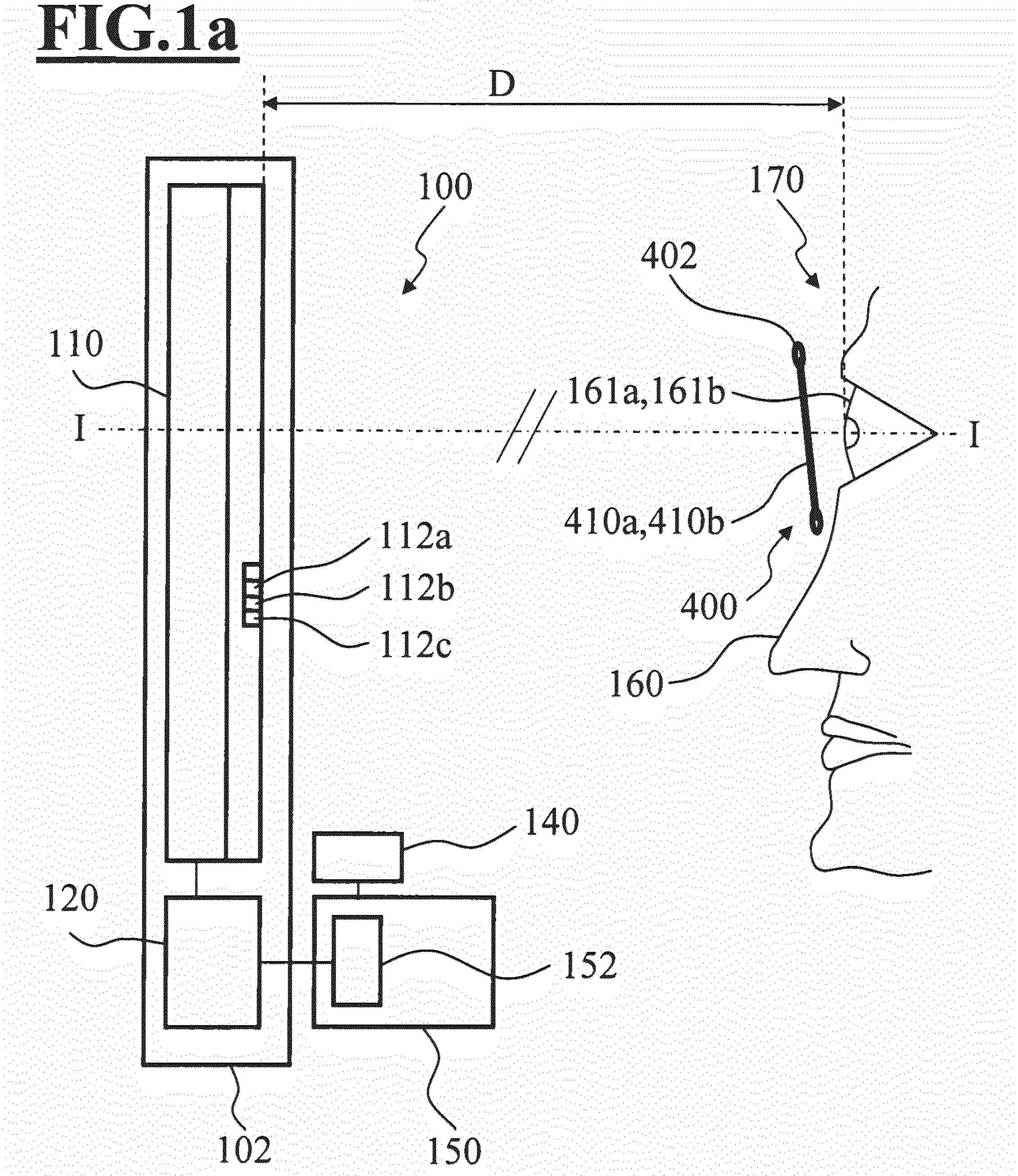
D
100
170
402
110
161a,161b
I
I
410a,410b
112a
112b
112c
400
160
140
120
152
102
150

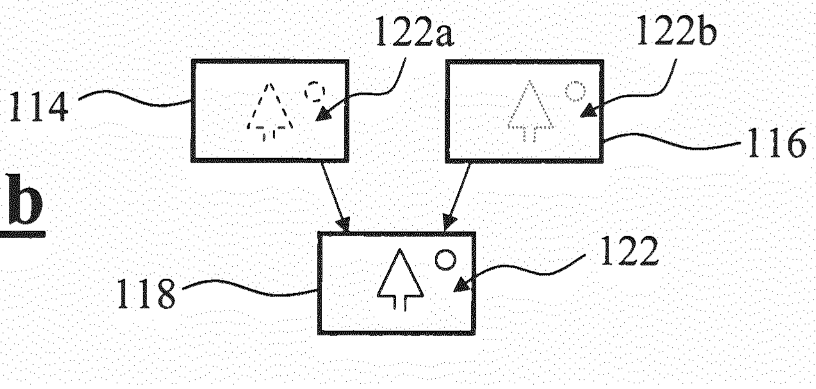
122a
122b
114
116
118
122

FIG.1b

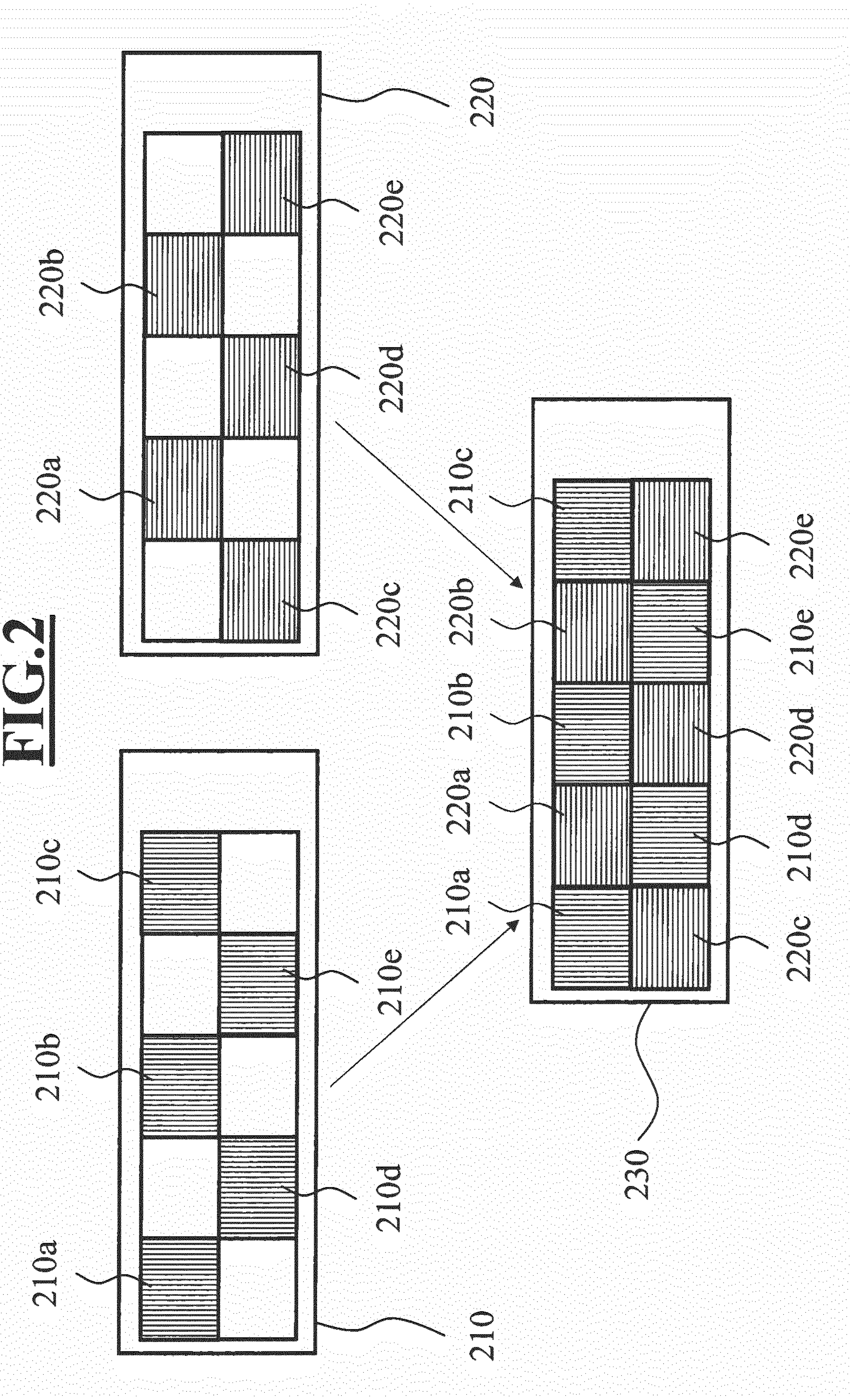


FIG.2

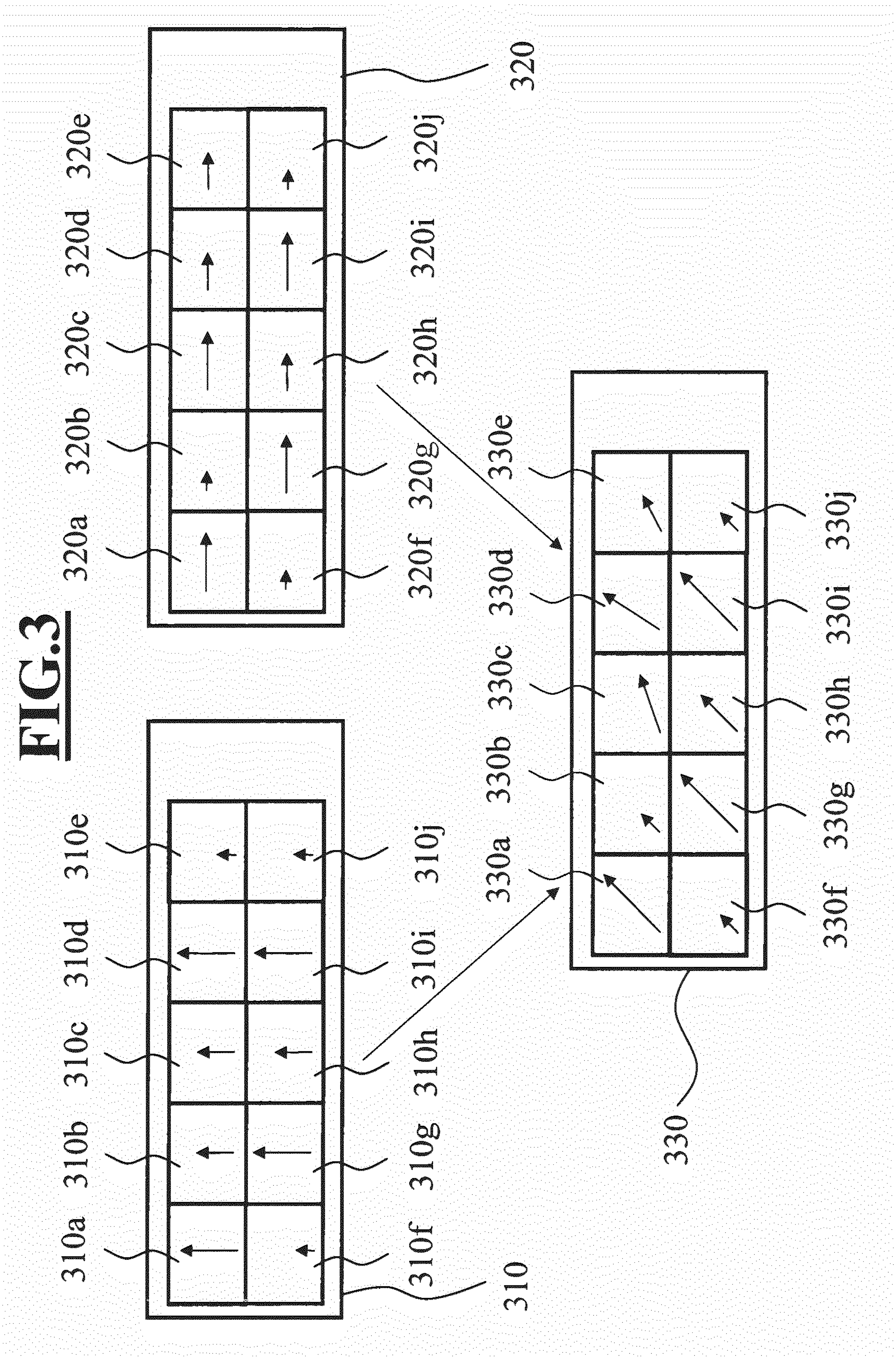
FIG.3
310
310a
310b
310c
310d
310e
310f
310g
310h
310i
310j
320
320a
320b
320c
320d
320e
320f
320g
320h
320i
320j
330
330a
330b
330c
330d
330e
330f
330g
330h
330i
330j

**FIG.4a**

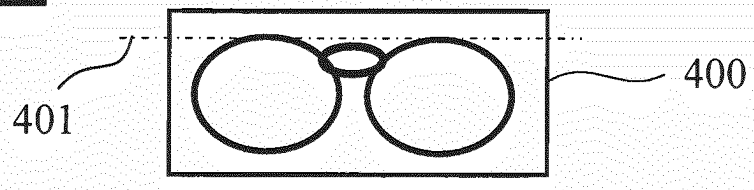


**FIG.4b**

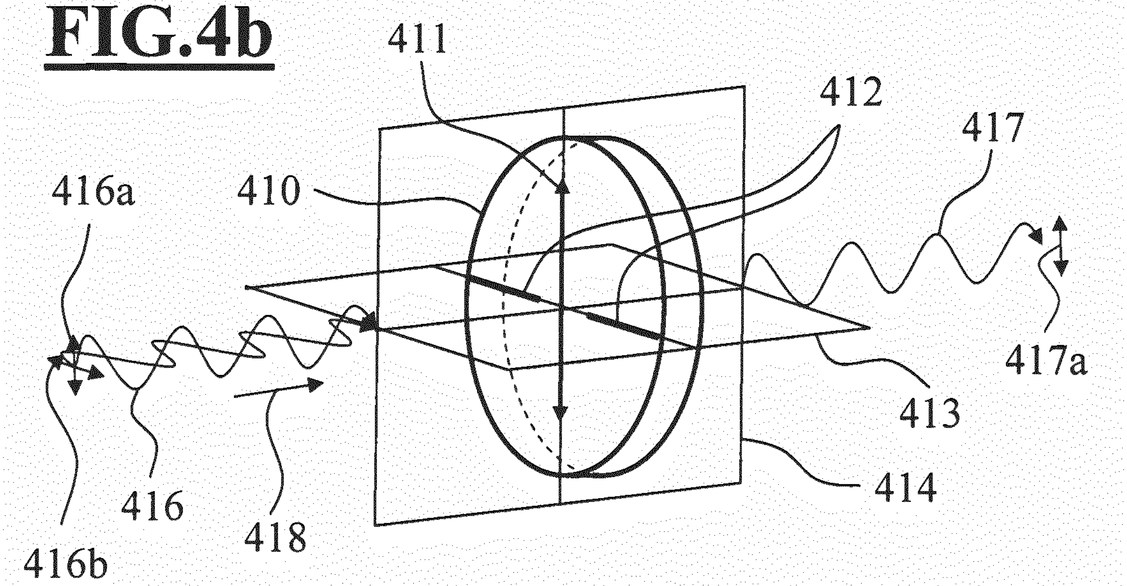


**FIG.4c**

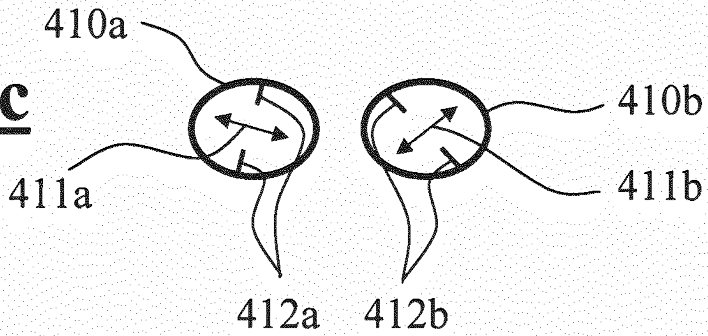


**FIG.4d**

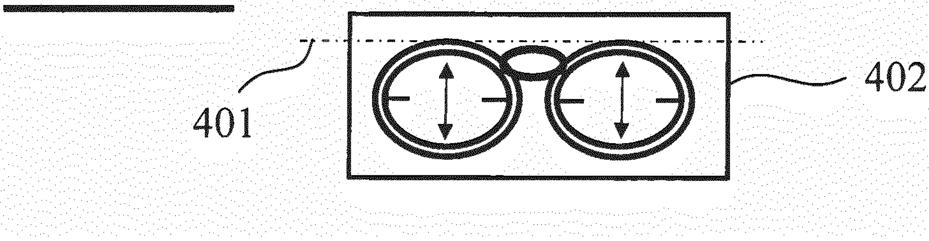

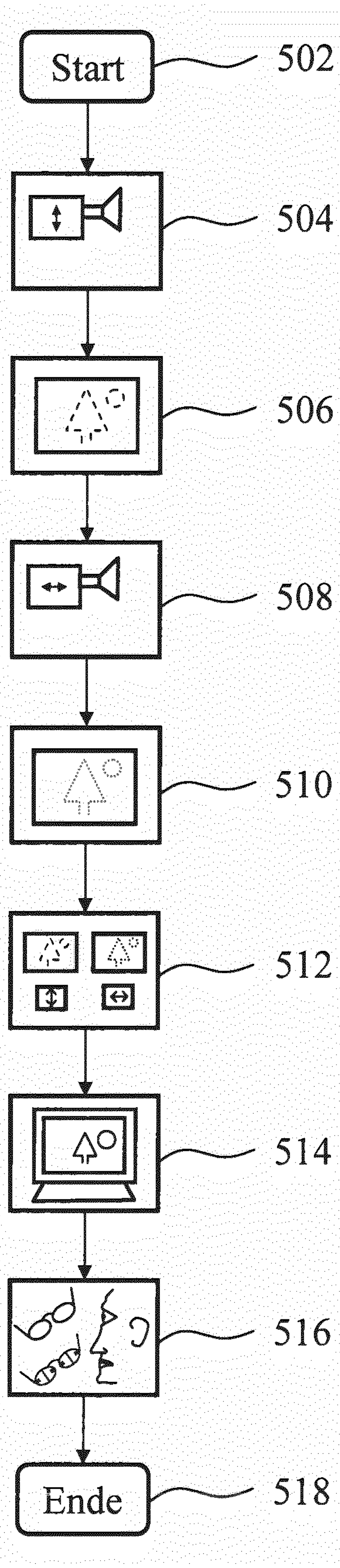


FIG.5

FIG. 6a

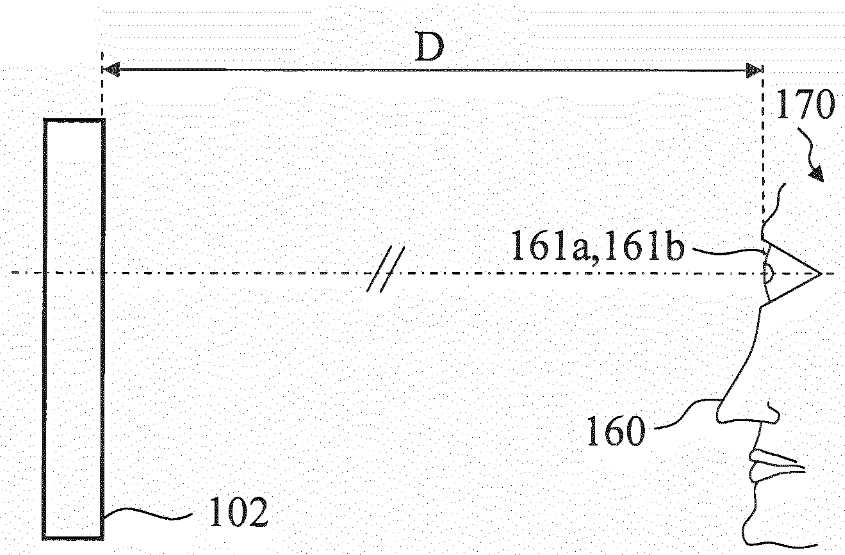


FIG. 6b

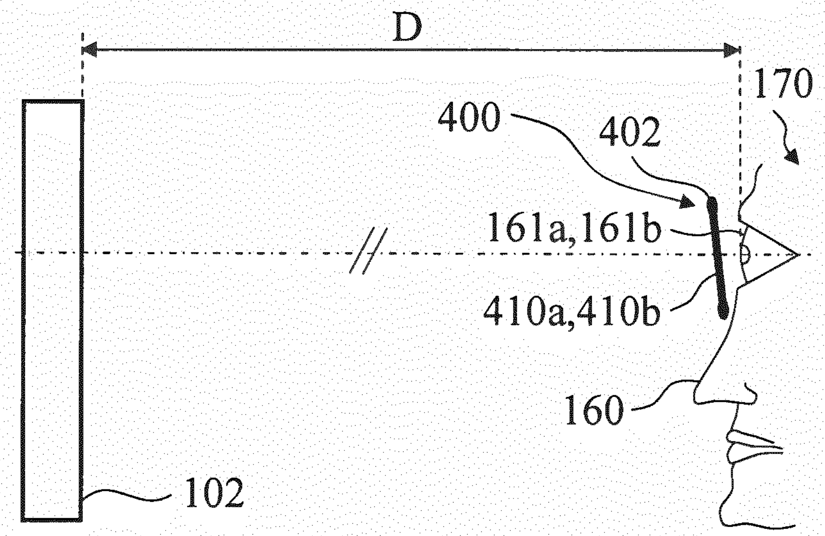


FIG. 6c

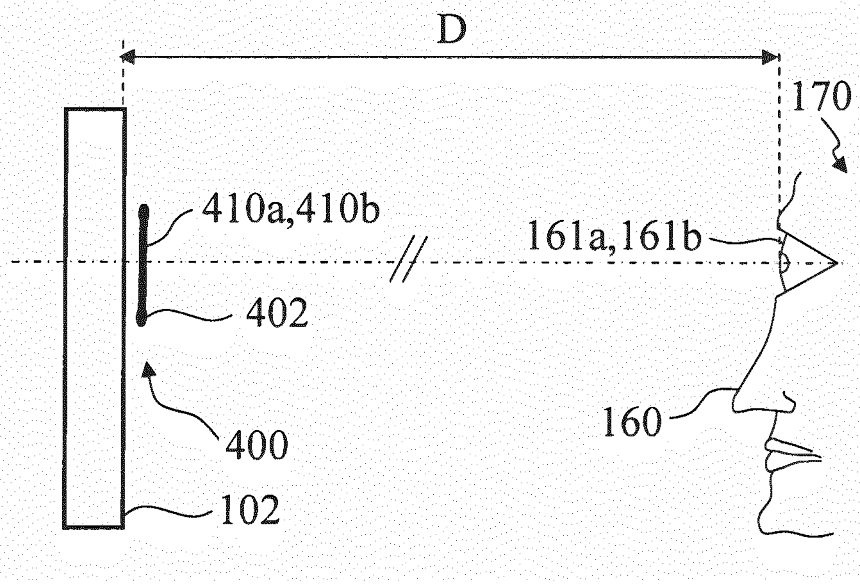

FIG.7a

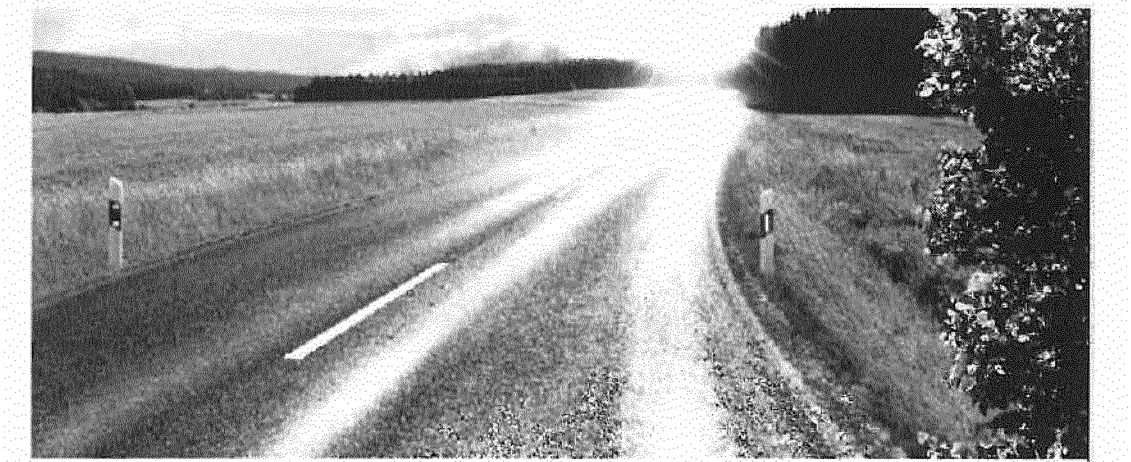

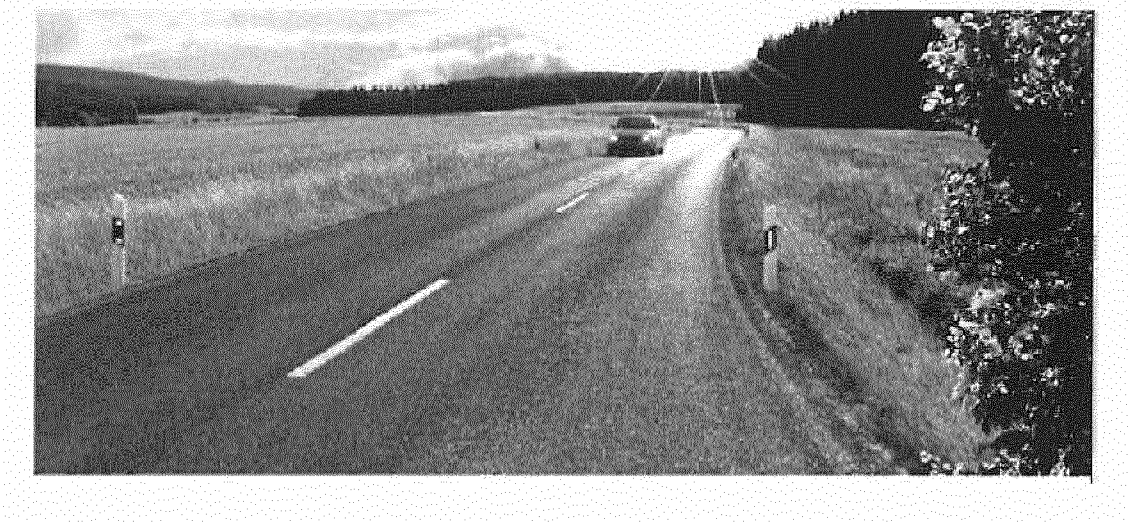

FIG.7b

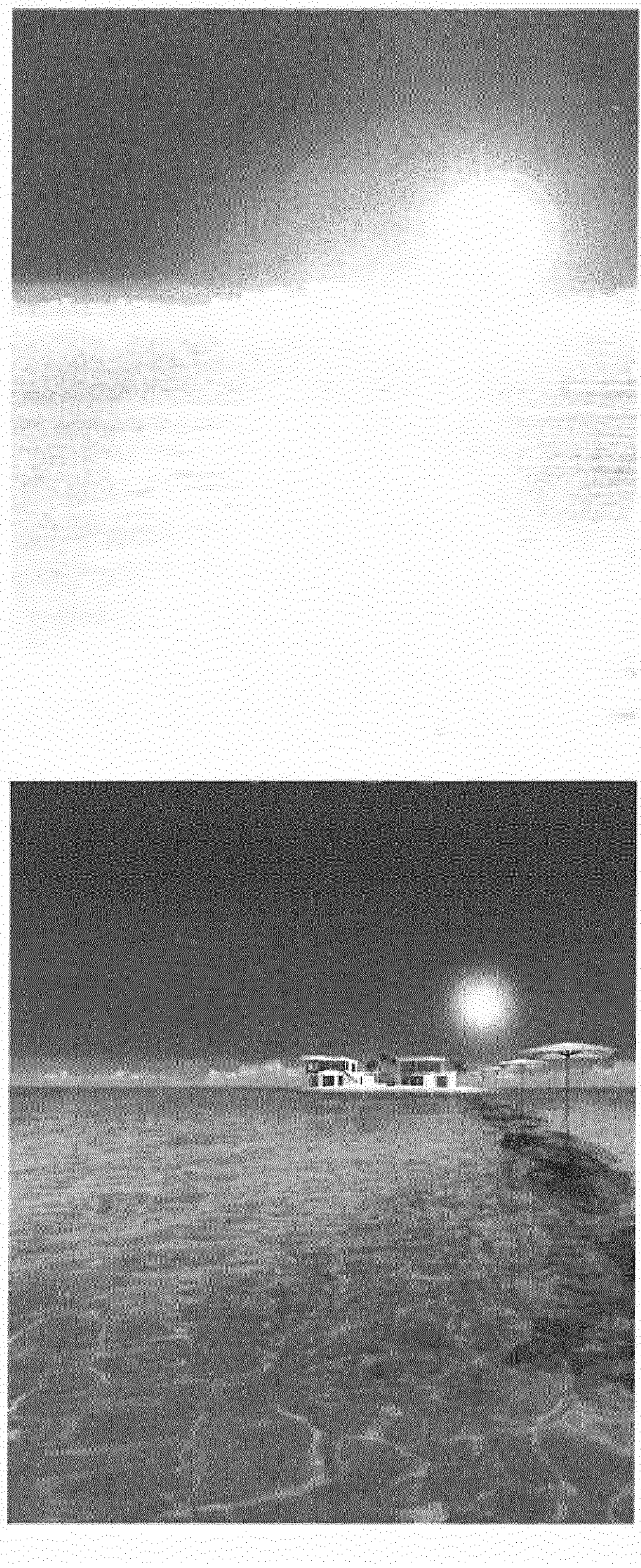

FIG.8a

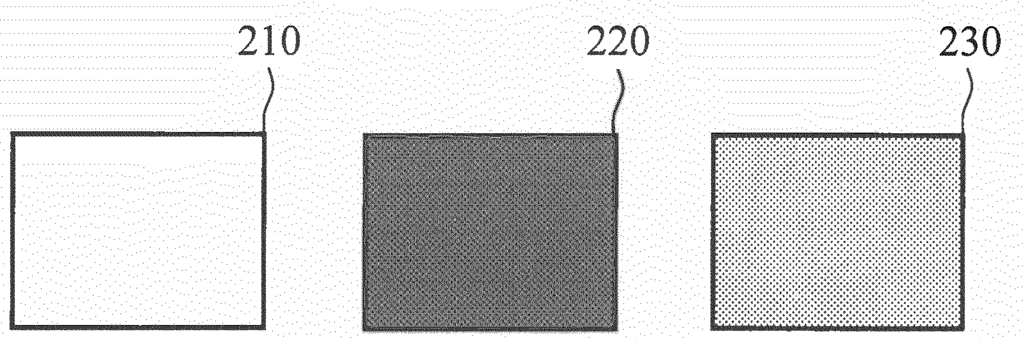


FIG.8b

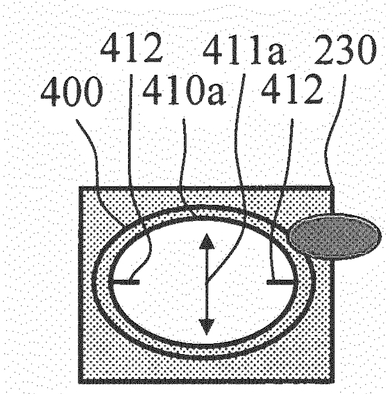


FIG.8c

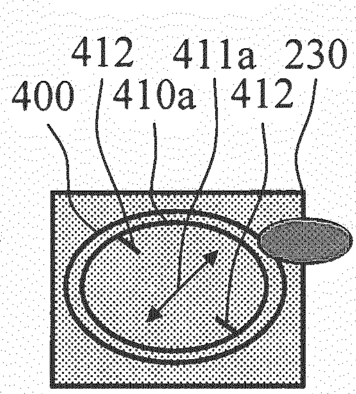


FIG.8d

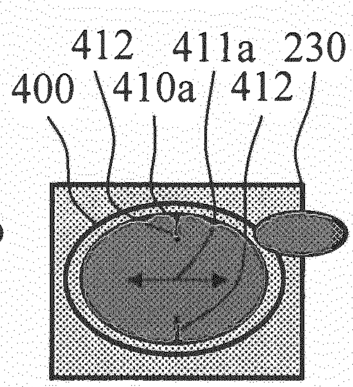


FIG.8e

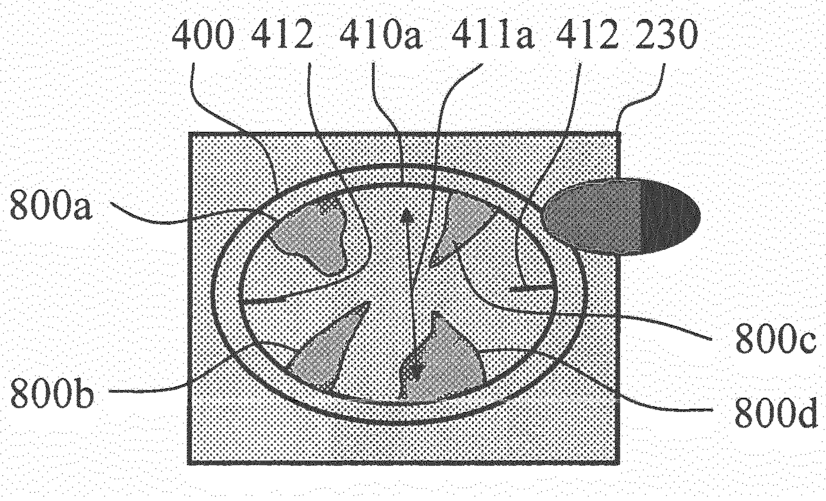

FIG.9

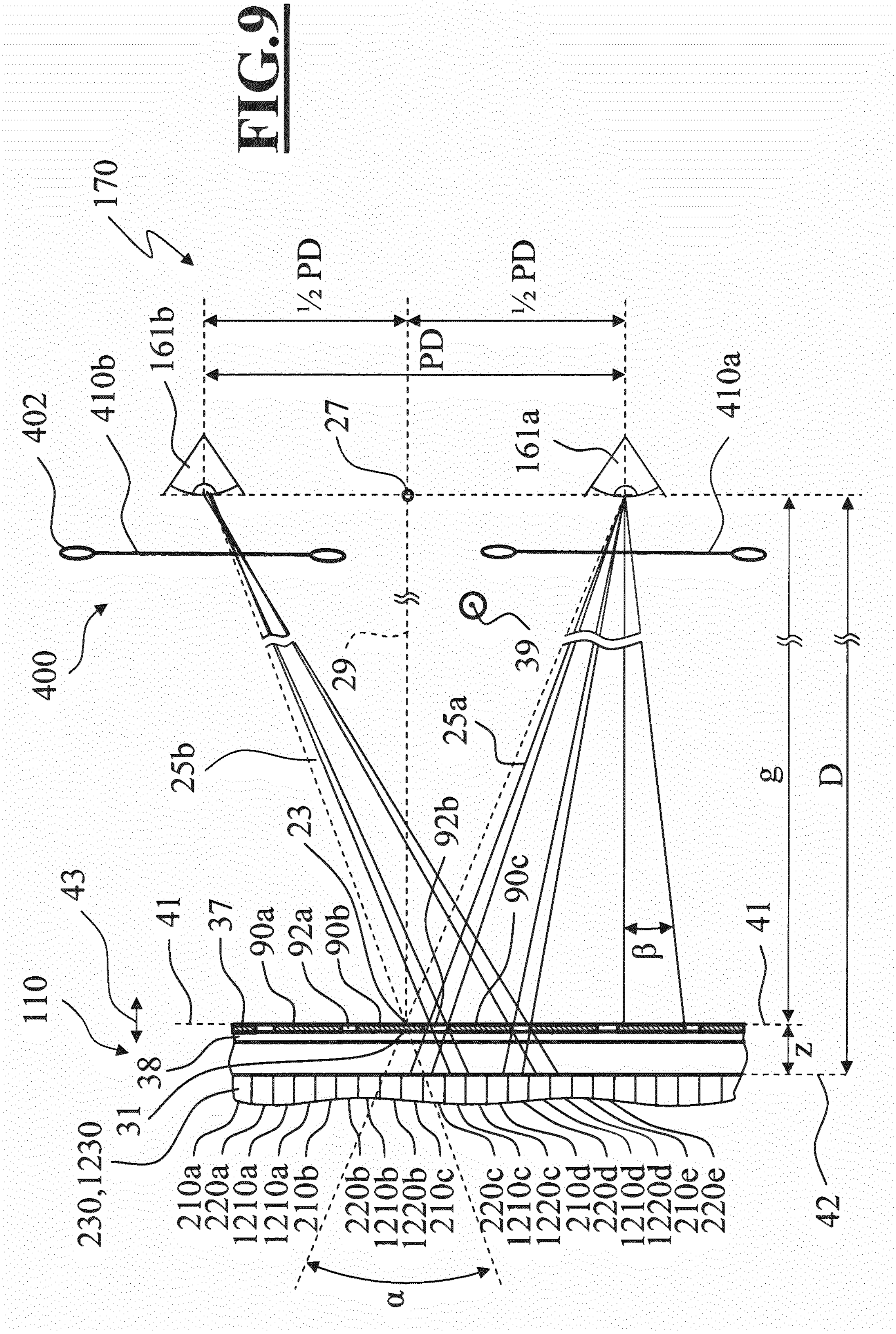
170
½ PD
½ PD
PD
161b
410b
402
27
161a
410a
400
29
39
25b
25a
23
92b
g
D
90c
43
41
37
90a
92a
90b
β
110
38
31
z
230,1230
210a
220a
1210a
1210a
210b
220b
1210b
1220b
210c
220c
1210c
1220c
210d
220d
1210d
1220d
210e
220e
42
α

FIG.10

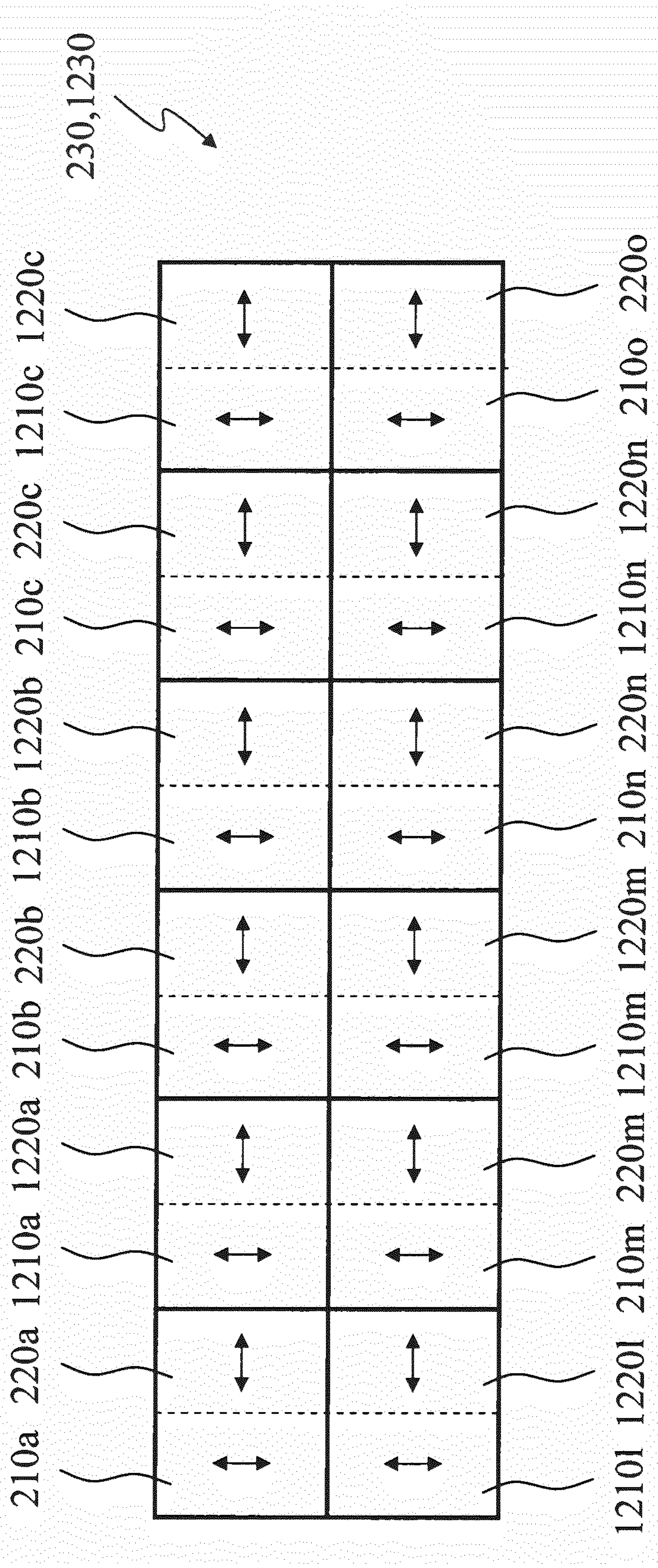
230,1230
210a
220a
1210a
1220a
210b
220b
1210b
1220b
210c
220c
1210c
1220c
1210l
1220l
210m
220m
1210m
1220m
210n
220n
1210n
1220n
210o
220o

FIG.11

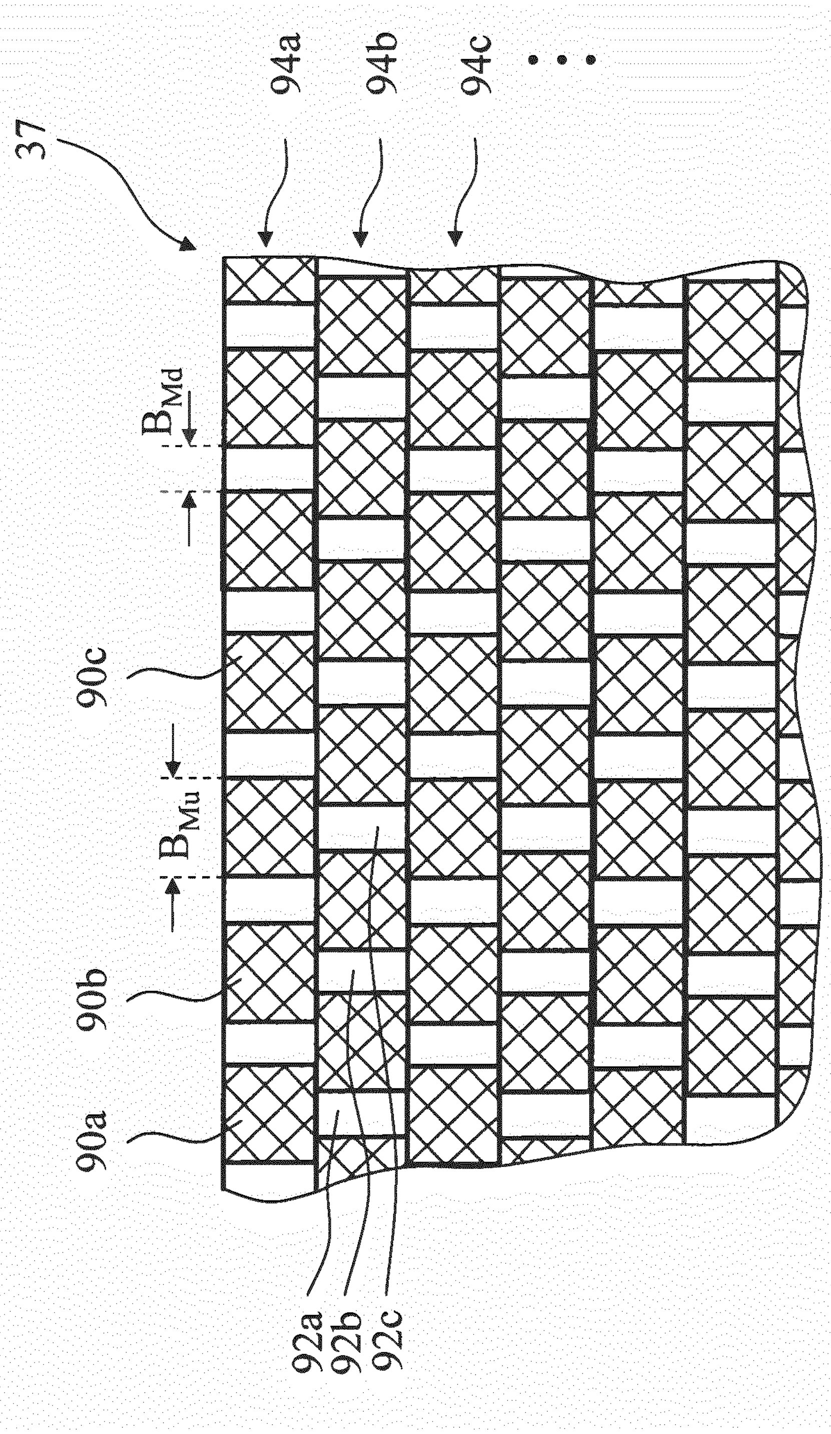

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 747235 A
- EP 0512443 A1
- EP 0595023 A1
- DE 19947775 A1
- DE 10007020 A1
- US 20060203338 A1